(19) 

**Europäisches Patentamt**
**European Patent Office**
**Office européen des brevets**

(11) **EP 4 701 279 A1**

(12) **EUROPEAN PATENT APPLICATION**
published in accordance with Art. 153(4) EPC

(43) Date of publication:
**25.02.2026 Bulletin 2026/09**

(21) Application number: **24806294.5**

(22) Date of filing: **22.04.2024**

(51) International Patent Classification (IPC):
**H04W 52/02** (2009.01) **H04W 72/04** (2023.01)

(52) Cooperative Patent Classification (CPC):
**H04W 52/02; H04W 56/00; H04W 72/04;**
**H04W 72/0453**

(86) International application number:
**PCT/CN2024/089112**

(87) International publication number:
**WO 2024/234938 (21.11.2024 Gazette 2024/47)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **12.05.2023 CN 202310541902**

(71) Applicant: **Huawei Technologies Co., Ltd.**
**Shenzhen, Guangdong 518129 (CN)**

(72) Inventors:
• **SUN, Huan**
  **Shenzhen, Guangdong 518129 (CN)**
• **LUO, Zhihu**
  **Shenzhen, Guangdong 518129 (CN)**

(74) Representative: **Maiwald GmbH**
**Elisenhof**
**Elisenstraße 3**
**80335 München (DE)**

(54) **RESOURCE INDICATION METHOD AND COMMUNICATION APPARATUS**

(57) This application provides a resource indication method and a communication apparatus. The method includes: determining a first frequency position of a first synchronization signal and physical broadcast channel block SSB, where the first SSB includes a first physical broadcast channel PBCH, and the first frequency position is associated with a first frequency domain resource mapping position of the first PBCH. A terminal device may determine the first frequency domain resource mapping position of the first PBCH based on an association relationship between the first frequency position and the first frequency domain resource mapping position, to correctly receive the first PBCH. In this manner, the first frequency domain resource mapping position of the first PBCH can be indicated without additional signaling exchange, so that transmission resource consumption can be reduced.

FIG. 4

## Description

This application claims priority to Chinese Patent Application No. 202310541902.5, filed with the China National Intellectual Property Administration on May 12, 2023 and entitled "RESOURCE INDICATION METHOD AND COMMUNICATION APPARATUS", which is incorporated herein by reference in its entirety.

## TECHNICAL FIELD

This application relates to the field of communication technologies, and more specifically, to a resource indication method and a communication apparatus.

## BACKGROUND

With diversification of application scenarios, for example, with emergency of dedicated network scenarios such as a railway mobile radio network and private network operation, some dedicated frequency bands may be configured for a dedicated network system in the dedicated network scenario. These dedicated frequency bands may support both a new radio (new radio, NR) system and the dedicated network system. In the dedicated network system, bandwidth that can be used by a network device may be less than 5 megahertz (megahertz, MHz). Therefore, a spectrum network whose bandwidth is less than 5 MHz may be defined for these dedicated frequency bands.

For a dedicated narrowband network with limited bandwidth, the network device may be incapable of completely sending one synchronization signal broadcast block (synchronization signal and physical broadcast channel block, SSB). For example, a physical broadcast channel (physical broadcast channel, PBCH) in an SSB occupies 20 RBs in frequency domain, and a PBCH in the SSB sent in the dedicated narrowband network occupies fewer than 20 RBs in frequency domain. To enable a terminal device to correctly receive an incomplete SSB, the network device may indicate a frequency domain resource mapping position of the incomplete SSB to the terminal device. However, exchange of this information may undoubtedly occupy an additional transmission resource. Therefore, a resource indication method and a communication apparatus are urgently needed to reduce transmission resource consumption.

## SUMMARY

This application provides a resource indication method and a communication apparatus, so that transmission resource consumption can be reduced.

According to a first aspect, a resource indication method is provided. The method may be implemented by a terminal device or a chip in the terminal device. The method includes: determining a first frequency position of a first synchronization signal and physical broadcast channel block SSB, where the first SSB includes a first physical broadcast channel PBCH, the first frequency position is associated with a first frequency domain resource mapping position of the first PBCH, frequency domain bandwidth occupied by the first PBCH is less than first bandwidth, and the first bandwidth is frequency domain bandwidth of a second PBCH; and receiving the first PBCH based on the first frequency domain resource mapping position.

Based on this technical solution, the terminal device may determine the first frequency domain resource mapping position of the first PBCH based on an association relationship between the first frequency position and the first frequency domain resource mapping position, to correctly receive the first PBCH. In this manner, the first frequency domain resource mapping position of the first PBCH can be indicated without additional signaling exchange, so that transmission resource consumption can be reduced.

According to a second aspect, a resource indication method is provided. The method may be implemented by a network device or a chip in the network device. The method includes: determining a first frequency position of a first synchronization broadcast signal block SSB, where the first SSB includes a first physical broadcast channel PBCH, the first frequency position is associated with a first frequency domain resource mapping position of the first PBCH, frequency domain bandwidth occupied by the first PBCH is less than first bandwidth, and the first bandwidth is frequency domain bandwidth of a second PBCH; and sending the first SSB at the first frequency position.

Beneficial effects of the second aspect are similar to those of the first aspect. Details are not described herein.

With reference to the first aspect or the second aspect, in some implementations of the first aspect or the second aspect, the first frequency domain resource mapping position is a resource position in channel bandwidth, transmission bandwidth, or maximum transmission bandwidth.

Based on this technical solution, the terminal device receives the first PBCH whose frequency domain bandwidth is less than that of the second PBCH, and the frequency domain resource mapping position of the first PBCH is the resource position in the channel bandwidth, the transmission bandwidth, or the maximum transmission bandwidth. The terminal device can correctly receive the first PBCH based on the association relationship, to improve decoding performance or receiving performance of the first PBCH.

With reference to the first aspect or the second aspect, in some implementations of the first aspect or the second aspect, the first frequency position is associated with the channel bandwidth, the transmission bandwidth, or the maximum transmission bandwidth.

Based on this technical solution, the first frequency domain resource mapping position may be associated with the channel bandwidth, the transmission bandwidth, or the maximum transmission bandwidth, and the first frequency domain resource mapping position is indicated based on the channel bandwidth, the transmission bandwidth, or the maximum transmission bandwidth, so that signaling overheads can be further reduced.

With reference to the first aspect or the second aspect, in some implementations of the first aspect or the second aspect, the first frequency position is associated with at least one of the following: a highest frequency domain resource mapping position of the first frequency domain resource mapping position, a lowest frequency domain resource mapping position of the first frequency domain resource mapping position, a center frequency domain resource mapping position of the first frequency domain resource mapping position, or a set-to-0 frequency domain resource mapping position of the first PBCH.

Based on this technical solution, for different scenario requirements, association relationships in different forms may be used. For example, if the first frequency domain resource mapping positions are contiguous in frequency domain by default, the terminal device may correctly receive the first PBCH based on association relationships between the first frequency position, and the highest and lowest frequency domain resource mapping positions of the first frequency domain resource mapping position.

For example, the first frequency position is associated with the channel bandwidth, the transmission bandwidth, or the maximum transmission bandwidth. In addition, the first frequency position is associated with the first frequency domain resource mapping position.

Based on this technical solution, the first frequency position may be associated with the channel bandwidth, the transmission bandwidth, or the maximum transmission bandwidth. In addition, the first frequency position is also associated with the first frequency domain resource mapping position. The first frequency position may indicate two pieces of information: the channel bandwidth, the transmission bandwidth, or the maximum transmission bandwidth; and the first frequency domain resource mapping position. Alternatively, the first frequency position may indicate the first frequency domain resource mapping position associated with the channel bandwidth, the transmission bandwidth, or the maximum transmission bandwidth, so that signaling overheads can be further reduced.

With reference to the first aspect or the second aspect, in some implementations of the first aspect or the second aspect, the first frequency domain resource mapping position is associated with at least one of the following: a center frequency position of the first SSB, a highest frequency position of a synchronization signal in the first SSB, a lowest frequency position of a synchronization signal in the first SSB, a center subcarrier position of a synchronization signal in the first SSB, or a frequency band number corresponding to the first frequency position.

Based on this technical solution, for different scenario requirements, association relationships in different forms may be used. For example, the terminal device may detect the center subcarrier position of the synchronization signal, and correctly receive the first PBCH based on an association relationship between the center subcarrier position of the synchronization signal and the first frequency domain resource mapping position.

With reference to the first aspect or the second aspect, in some implementations of the first aspect or the second aspect, the first frequency position is the center subcarrier position of the synchronization signal in the first SSB, and determining the first frequency position of the first SSB includes: determining the center subcarrier position from a plurality of frequency positions, where the plurality of frequency positions $SS_{REF}$ satisfy:

$$SS_{REF} = Y \times f_1 + Z \times f_2 + X,$$

where
$f_1$ represents a first frequency greater than 0, $f_2$ represents a second frequency greater than 0, Y and Z are positive integers, X is a non-negative integer, and the first frequency domain resource mapping position is associated with a first value of Y and/or a second value of Z, where the first value is a value of Y corresponding to the first frequency position, and the second value is a value of Z corresponding to the first frequency position.

Based on this technical solution, the terminal device may determine the first frequency domain resource mapping position based on the first frequency position, so that the first frequency domain resource mapping position of the first PBCH can be indicated without additional signaling exchange, so that transmission resource consumption can be reduced.

With reference to the first aspect or the second aspect, in some implementations of the first aspect or the second aspect, the first frequency domain resource mapping position $F_{PBCH}$ satisfies $F_{low} \leq F_{PBCH} \leq F_{high}$, where $F_{low}$ represents the lowest frequency domain resource mapping position of the first frequency domain resource mapping position, and $F_{high}$ represents the highest frequency domain resource mapping position of the first frequency domain resource mapping position

position, where $F_{high}$ satisfies $F_{high}=F_{ref}+offset1$, and Flow satisfies $F_{ref}-offset2$, where offset1 represents a first offset value, offset2 represents a second offset value, $F_{ref}$ represents a reference frequency position, and the reference frequency position is associated with the first frequency position.

Based on this technical solution, the terminal device may determine the first frequency domain resource mapping position by setting an offset value, so that the first frequency domain resource mapping position of the first PBCH can be indicated without additional signaling exchange, so that transmission resource consumption can be reduced.

With reference to the first aspect or the second aspect, in some implementations of the first aspect or the second aspect, the channel bandwidth is 3 megahertz MHz, the transmission bandwidth is less than 5 MHz, the transmission bandwidth is 12 resource blocks RBs or 15 RBs, or the maximum transmission bandwidth is 12 RBs or 15 RBs.

Based on this implementation solution, the terminal device may correctly receive the first SSB in a network that does not support transmission of a complete second SSB, so that reliability of transmission of the first SSB can be improved.

For example, the second SSB occupies 240 adjacent contiguous subcarriers in frequency domain, and the subcarriers are numbered from 0 to 239. The second PBCH occupies a subcarrier in a frequency domain range of the second SSB.

For example, the first SSB further includes a first physical broadcast channel demodulation reference signal PBCH DMRS. Frequency domain bandwidth occupied by the first PBCH DMRS is less than the second bandwidth, the second bandwidth is frequency domain bandwidth occupied by a PBCH DMRS in the second PBCH, and a second frequency domain resource mapping position of the first PBCH DMRS is associated with the first frequency position. Receiving the first PBCH based on the first frequency domain resource mapping position includes: receiving the first PBCH DMRS based on the second frequency domain resource mapping position.

For example, the first frequency position is the first SSB or the center subcarrier position of the synchronization signal in the first SSB, and determining the first frequency position of the first SSB includes: determining the first SSB or the center subcarrier position of the synchronization signal in the first SSB from a plurality of frequency positions, where the plurality of frequency positions $SS_{REF}$ satisfy:

$$SS_{REF}=S*f_3+T,$$

where

$f_3$ represents a first frequency greater than 0, S is a positive integer, T is a non-negative integer, and the first frequency domain resource mapping position is associated with a first value of S, where the first value is a value of S corresponding to the first frequency position.

According to a third aspect, a resource indication method is provided. The method may be implemented by a terminal device or a chip in the terminal device. The method includes: obtaining a synchronization signal of a first synchronization signal and physical broadcast channel block SSB, where the first SSB includes a first physical broadcast channel PBCH, a DMRS signal of the first PBCH, and the synchronization signal. The synchronization signal is associated with a first frequency domain resource mapping position of the first PBCH, frequency domain bandwidth occupied by the first PBCH is less than first bandwidth, and the first bandwidth is frequency domain bandwidth of a second PBCH. The first PBCH is received based on the first frequency domain resource mapping position. Alternatively, the DMRS signal of the first PBCH is associated with a first frequency domain resource mapping position of the first PBCH, frequency domain bandwidth occupied by the first PBCH is less than first bandwidth, and the first bandwidth is frequency domain bandwidth of a second PBCH.

That the DMRS signal of the first PBCH is associated with the first frequency domain resource mapping position of the first PBCH includes:

an initial value corresponding to a generation sequence of the DMRS is associated with a first parameter, and the first parameter indicates the first frequency domain resource mapping position of the first PBCH.

In a possible implementation, the initial value $c_{init}$ of the generation sequence of the DMRS satisfies:

$$c_{init} = 2^A * (k + B) + 2^{11}\left(\bar{i}_{SSB} + 1\right)\left(\lfloor N_{ID}^{cell}/4 \rfloor + 1\right) + 2^6\left(\bar{i}_{SSB} + 1\right) + \left(N_{ID}^{cell} \bmod 4\right).$$

A is 2, 3, 4, 5, 22, 23, 24, 25, 26, 27, 28, 29, 30, or 31, B is 0 or 1, k is the first parameter, and $\bar{i}_{SSB} = i_{SSB} + 4n_{hf}$. $n_{hf}$ is a number of a half-frame in which transmission of the first PBCH is performed, $n_{hf} = 0$, representing a 1st half-frame in one frame, and $n_{hf} = 1$, representing a 2nd half-frame in one frame. $i_{SSB}$ is two least significant bits (two least significant bits) of an SSB index. $N_{ID}^{cell}$ is a physical layer cell identifier.

The generation sequence of the DMRS is generated based on the initial value in a manner of generating a Gold sequence whose length is 31. For the manner of generating the Gold sequence whose length is 31, refer to descriptions in section 5.2.1 in 3GPP TS 38.211 V15.8. Details are not described herein. Based on this technical solution, the terminal device may determine the first frequency domain resource mapping position of the first PBCH based on the association relationship between the synchronization signal and the first frequency domain resource mapping position, to correctly receive the first PBCH. In this manner, the first frequency domain resource mapping position of the first PBCH can be indicated without additional signaling exchange, so that transmission resource consumption can be reduced.

According to a fourth aspect, a resource indication method is provided. The method may be implemented by a network device or a chip in the network device. The method includes: generating a first synchronization signal and physical broadcast channel block SSB, where the first SSB includes a first physical broadcast channel PBCH, a DMRS signal of the first PBCH, and a synchronization signal. The synchronization signal is associated with a first frequency domain resource mapping position of the first PBCH, frequency domain bandwidth occupied by the first PBCH is less than first bandwidth, and the first bandwidth is frequency domain bandwidth of a second PBCH. The first SSB is sent. Alternatively, the DMRS signal of the first PBCH is associated with a first frequency domain resource mapping position of the first PBCH, frequency domain bandwidth occupied by the first PBCH is less than first bandwidth, and the first bandwidth is frequency domain bandwidth of a second PBCH.

That the DMRS signal of the first PBCH is associated with the first frequency domain resource mapping position of the first PBCH includes:

An initial value corresponding to a generation sequence of the DMRS is associated with a first parameter, and the first parameter indicates the first frequency domain resource mapping position of the first PBCH.

In a possible implementation, the initial value $c_{init}$ of the generation sequence of the DMRS satisfies:

$$c_{init} = 2^A * (k + B) + 2^{11}(\bar{i}_{SSB} + 1)(\lfloor N_{ID}^{cell}/4 \rfloor + 1) + 2^6(\bar{i}_{SSB} + 1) + (N_{ID}^{cell} \bmod 4).$$

A is 2, 3, 4, 5, 22, 23, 24, 25, 26, 27, 28, 29, 30, or 31, B is 0 or 1, k is the first parameter, and $\bar{i}_{SSB} = i_{SSB} + 4n_{hf}$. $n_{hf}$ is a number of a half-frame in which transmission of the first PBCH is performed, $n_{hf} = 0$, representing a 1st half-frame in one frame, and $n_{hf} = 1$, representing a 2nd half-frame in one frame. $i_{SSB}$ is two least significant bits (two least significant bits) of an SSB index. $N_{ID}^{cell}$ is a physical layer cell identifier.

The generation sequence of the DMRS is generated based on the initial value in a manner of generating a Gold sequence whose length is 31. For the manner of generating the Gold sequence whose length is 31, refer to descriptions in section 5.2.1 in 3GPP TS 38.211 V15.8. Details are not described herein.

For beneficial effects of the fourth aspect, refer to the descriptions of the third aspect. Details are not described herein.

With reference to the third aspect or the fourth aspect, in some implementations of the third aspect or the fourth aspect, the first frequency domain resource mapping position is a resource position in channel bandwidth, transmission bandwidth, or maximum transmission bandwidth.

Based on this technical solution, the terminal device receives the first PBCH whose frequency domain bandwidth is less than that of the second PBCH, and the frequency domain resource mapping position of the first PBCH is the resource position in the channel bandwidth, the transmission bandwidth, or the maximum transmission bandwidth. The terminal device can correctly receive the first PBCH based on the association relationship, so that reliability of SSB transmission can be improved.

With reference to the third aspect or the fourth aspect, in some implementations of the third aspect or the fourth aspect, the first frequency position is associated with the channel bandwidth, the transmission bandwidth, or the maximum transmission bandwidth.

Based on this technical solution, the synchronization signal may be associated with the channel bandwidth, the transmission bandwidth, or the maximum transmission bandwidth. The channel bandwidth, the transmission bandwidth, or the maximum transmission bandwidth indicates the first frequency domain resource mapping position. The associated synchronization signal may indicate two pieces of information: the channel bandwidth, the transmission bandwidth, or the maximum transmission bandwidth; and the first frequency domain resource mapping position, so that transmission resource consumption can be further reduced.

With reference to the third aspect or the fourth aspect, in some implementations of the third aspect or the fourth aspect, the synchronization signal includes a first synchronization signal and/or a second synchronization signal. The first synchronization signal is associated with the first frequency domain resource mapping position of the first PBCH, and the second synchronization signal is associated with a first physical cell identifier. Alternatively, the second synchronization signal is associated with the first frequency domain resource mapping position of the first PBCH, and the first synchronization signal and the second synchronization signal are associated with a first physical cell identifier. Alternatively, the first synchronization signal and the second synchronization signal are associated with the first frequency domain resource mapping position of the first PBCH, and the first synchronization signal and the second synchronization signal are associated with a first physical cell identifier.

Based on this technical solution, the network device may reuse the synchronization signal, so that the synchronization signal has two functions of indicating the first physical cell identifier and indicating the first frequency domain resource mapping position of the first PBCH, so that transmission resource consumption can be reduced.

With reference to the third aspect or the fourth aspect, in some implementations of the third aspect or the fourth aspect, the channel bandwidth is 3 megahertz MHz, the transmission bandwidth is less than 5 MHz, the transmission bandwidth is 12 resource blocks RBs or 15 RBs, or the maximum transmission bandwidth is 12 RBs or 15 RBs.

Based on this implementation solution, the terminal device may correctly receive the first SSB in a network that does not support transmission of a complete second SSB, so that decoding performance or receiving performance of the first PBCH is improved.

For example, the second SSB occupies 240 adjacent contiguous subcarriers in frequency domain, and the subcarriers are numbered from 0 to 239. The second PBCH occupies a subcarrier in a frequency domain range of the second SSB.

For example, the first SSB further includes a first physical broadcast channel demodulation reference signal PBCH DMRS. Frequency domain bandwidth occupied by the first PBCH DMRS is less than the first bandwidth, and a second frequency domain resource mapping position of the first PBCH DMRS is associated with the synchronization signal. Before receiving the first PBCH based on the first frequency domain resource mapping position, the method further includes: receiving the first PBCH DMRS based on the second frequency domain resource mapping position.

According to a fifth aspect, a resource indication method is provided. The method may be implemented by a terminal device or a chip in the terminal device. The method includes: receiving a channel state information-reference signal CSI-RS. When a preset condition is met, a value of density of a frequency domain resource occupied by the channel state information-reference signal CSI-RS is greater than 3, or a value of a quantity of time domain resource symbols occupied by the channel state information-reference signal CSI-RS is greater than or equal to 2 and the time domain resource symbols belong to a same resource.

According to a sixth aspect, a resource indication method is provided. The method may be implemented by a network device or a chip in the network device. The method includes: sending a channel state information-reference signal CSI-RS. When a preset condition is met, a value of density of a frequency domain resource occupied by the channel state information-reference signal CSI-RS is greater than 3, or a value of a quantity of time domain resource symbols occupied by the channel state information-reference signal CSI-RS is greater than or equal to 2 and the time domain resource symbols belong to a same resource.

The same resource is a resource in a CSI-RS resource set.

With reference to the fifth aspect or the sixth aspect, in some implementations of the fifth aspect or the sixth aspect, the preset condition includes at least one of the following: Bandwidth of a channel on which the CSI-RS is located is 3 MHz; a number of a frequency band on which the CSI-RS is located is n26, n28, n56, n100, or n106; and a quantity of frequency domain resources occupied by the channel state information-reference signal CSI-RS is less than or equal to a first threshold.

With reference to the fifth aspect or the sixth aspect, in some implementations of the fifth aspect or the sixth aspect, the first threshold is greater than or equal to 24. For example, the first threshold is equal to 24 or 48.

With reference to the fifth aspect or the sixth aspect, in some implementations of the fifth aspect or the sixth aspect, the channel state information-reference signal CSI-RS is configured for mobility measurement of a cell of the network device.

With reference to the fifth aspect or the sixth aspect, in some implementations of the fifth aspect or the sixth aspect, the value of the density of the frequency domain resource occupied by the channel state information-reference signal CSI-RS is 4, 6, or 12.

With reference to the fifth aspect or the sixth aspect, in some implementations of the fifth aspect or the sixth aspect, the value of the quantity of time domain resource symbols occupied by the channel state information-reference signal CSI-RS is 2 or 3.

With reference to the fifth aspect or the sixth aspect, in some implementations of the fifth aspect or the sixth aspect, in a time domain resource occupied by the channel state information-reference signal CSI-RS, time domain signals corresponding to a plurality of symbols belonging to a same resource are the same.

According to a seventh aspect, a communication apparatus is provided. The communication apparatus has a function of implementing the method in any one of the first aspect or the possible implementations of the first aspect. The function may be implemented by hardware, or may be implemented by hardware executing corresponding software. The hardware or the software includes one or more modules corresponding to the foregoing function.

According to an eighth aspect, a communication apparatus is provided. The communication apparatus has a function of implementing the method in any one of the second aspect or the possible implementations of the second aspect. The function may be implemented by hardware, or may be implemented by hardware executing corresponding software. The hardware or the software includes one or more modules corresponding to the foregoing function.

According to a ninth aspect, a communication apparatus is provided. The communication apparatus has a function of implementing the method in any one of the third aspect or the fourth aspect, or the possible implementations of the third aspect or the fourth aspect. The function may be implemented by hardware, or may be implemented by hardware executing corresponding software. The hardware or the software includes one or more modules corresponding to the foregoing function.

According to a tenth aspect, a communication apparatus is provided. The communication apparatus has a function of implementing the method in any one of the fifth aspect or the sixth aspect, or the possible implementations of the fifth aspect or the sixth aspect. The function may be implemented by hardware, or may be implemented by hardware executing corresponding software. The hardware or the software includes one or more modules corresponding to the foregoing function.

According to an eleventh aspect, a communication apparatus is provided, and includes a processor and a memory. Optionally, the communication apparatus may further include a transceiver. The memory is configured to store a computer program. The processor is configured to: invoke and run the computer program stored in the memory, and control the transceiver to receive/send a signal, to cause the communication apparatus to perform the method in any one of the first aspect, the third aspect, or the fifth aspect, or the possible implementations of any one of these aspects.

For example, the communication apparatus is a terminal device or a chip used in the terminal device.

According to a twelfth aspect, a communication apparatus is provided, and includes a processor and a memory. Optionally, the communication apparatus may further include a transceiver. The memory is configured to store a computer program. The processor is configured to: invoke and run the computer program stored in the memory, and control the transceiver to receive/send a signal, to cause the communication apparatus to perform the method in any one of the second aspect, the fourth aspect, or the sixth aspect, or the possible implementations of any one of these aspects.

For example, the communication apparatus is a network device or a chip used in the network device.

According to a thirteenth aspect, a communication apparatus is provided, and includes a processor and a communication interface. The communication interface is configured to: receive data and/or information, and transmit the received data and/or information to the processor. The processor processes the data and/or the information. In addition, the communication interface is further configured to output data and/or information that are/is obtained through processing by the processor, so that the method in any one of the first aspect, the third aspect, or the fifth aspect, or the possible implementations of any one of these aspects is performed.

The communication apparatus may be a terminal device or a chip used in the terminal device.

According to a fourteenth aspect, a communication apparatus is provided, and includes a processor and a communication interface. The communication interface is configured to: receive data and/or information, and transmit the received data and/or information to the processor. The processor processes the data and/or the information. In addition, the communication interface is further configured to output data and/or information that are/is obtained through processing by the processor, so that the method in any one of the second aspect, the fourth aspect, or the sixth aspect, or the possible implementations of any one of these aspects is performed.

The communication apparatus may be a network device or a chip used in the network device.

According to a fifteenth aspect, a computer-readable storage medium is provided. The computer-readable storage medium stores computer instructions, and when the computer instructions are run on a computer, the method in any one of the first aspect to the sixth aspect, or the possible implementations of any one of these aspects is performed.

According to a sixteenth aspect, a computer program product is provided. The computer program product includes computer program code, and when the computer program code is run on a computer, the method in any one of the first aspect to the sixth aspect or the possible implementations of any one of these aspects is performed.

According to a seventeenth aspect, a communication system is provided, and includes the communication apparatus in any one or more of the fifth aspect to the sixteenth aspect, or the communication apparatus in any one of the possible implementations of any one of these aspects.

**BRIEF DESCRIPTION OF DRAWINGS**

FIG. 1 is a diagram of a communication system 100 applicable to an embodiment of this application;

FIG. 2 is a diagram of a structure of a time-frequency resource of an SSB;

FIG. 3 is a diagram of a synchronization raster;

FIG. 4 is a schematic flowchart of a possible resource indication method according to an embodiment of this application;

FIG. 5(a) to FIG. 5(c) are a diagram of determining a frequency domain resource mapping position based on a synchronization raster;

FIG. 6(a) to FIG. 6(e) are a diagram of determining a frequency domain resource mapping position based on an offset value;

FIG. 7 is a schematic flowchart of another possible resource indication method according to an embodiment of this application; and

FIG. 8 to FIG. 10 are diagrams of structures of possible apparatuses according to embodiments of this application.

## DESCRIPTION OF EMBODIMENTS

The following describes technical solutions in this application with reference to accompanying drawings.

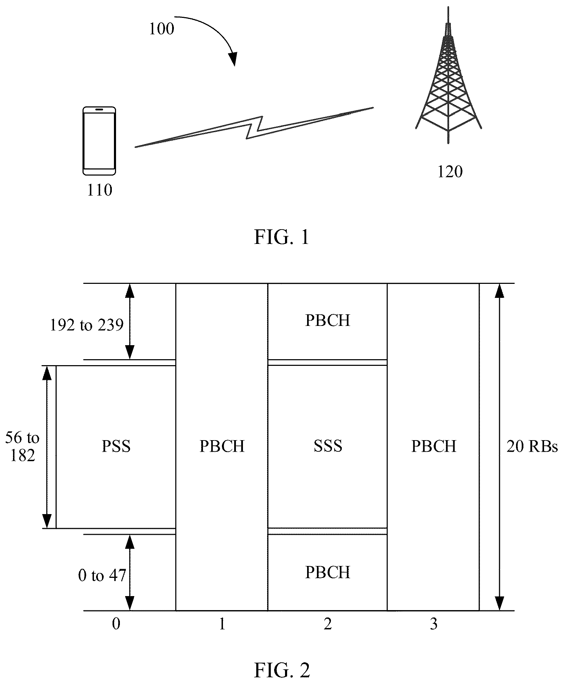

FIG. 1 is a diagram of a communication system 100 applicable to an embodiment of this application.

As shown in FIG. 1, the communication system 100 may include one network device 120, and may further include at least one terminal device 110. A connection may be established between the terminal device 110 and the network device 120 for communication.

The terminal device in embodiments of this application may be user equipment, an access terminal, a subscriber unit, a subscriber station, a mobile station, a remote station, a remote terminal, a mobile device, a user terminal, a wireless communication device, a user agent, or a user apparatus. A terminal in embodiments of this application may be a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal in a 5G network, a terminal in a future evolved network, or the like.

The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that is directly worn on a body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that are dedicated to only one type of application function and need to work with other devices such as smartphones, such as various smart bands or smart jewelry for monitoring physical signs.

In addition, the terminal device may alternatively be a terminal device in an internet of things (internet of things, IoT) system. IoT is an important part of future information technology development. A main technical feature of the IoT is to connect an object to a network by using a communication technology, to implement an intelligent network for human-machine interconnection and thing-thing interconnection. A specific form of the terminal device is not limited in this application.

It should be understood that in embodiments of this application, the terminal device may be an apparatus configured to implement a function of the terminal device, or may be an apparatus, for example, a chip system, that can support the terminal device in implementing the function. The apparatus may be installed in the terminal. In embodiments of this application, the chip system may include a chip, or may include a chip and another discrete component.

The network device in embodiments of this application may be any device having a wireless transceiver function. The device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or home NodeB, HNB), a baseband unit (baseband unit, BBU), or an access point (access point, AP), a wireless relay node, a wireless backhaul node, a transmission point (transmission point, TP), a transmission reception point (transmission reception point, TRP), or the like in a wireless fidelity (wireless fidelity, Wi-Fi) system, may be a gNB or a transmission point (TRP or TP) in a 5G system like an NR system, or one antenna panel or a group of antenna panels (including a plurality of antenna panels) of a base station in a 5G system, or may be a network node, for example, a baseband unit (BBU) or a distributed unit (distributed unit, DU), that forms a gNB or a transmission point.

In some deployments, the gNB may include a central unit (central unit, CU) and a DU. The gNB may further include an active antenna unit (active antenna unit, AAU for short). The CU implements a part of functions of the gNB, and the DU implements a part of functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements a part of physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

It should be understood that, in embodiments of this application, the network device may be an apparatus configured to implement a function of the network device, or may be an apparatus, for example, a chip system, that can support the network device in implementing the function. The apparatus may be installed in the network device.

The technical solutions provided in this application may be applied to various communication systems, such as a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be also applied to a future communication system, for example, a 6th generation mobile communication system. The technical solutions provided in this application may also be applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

It should be understood that this application may be applied to a standalone 5G or LTE system, a future mobile communication system, or the like. This application may alternatively be applied to a non-standalone 5G or LTE system, a future mobile communication system, or the like, for example, a DC scenario including an evolved universal terrestrial radio access-new radio dual connectivity (evolved universal terrestrial radio access-NR dual connectivity, EN-DC) scenario and the like, and a carrier aggregation (carrier aggregation, CA) scenario. A data unit in this application may be a protocol data unit (protocol data unit, PDU), a service data unit SDU (service data unit, SDUA), or another data unit. This is not particularly limited in this application. The following uses the PDU as an example for description.

When accessing a network, a receiving device (for example, UE) may implement time and frequency synchronization by detecting an SSB sent by a sending device (for example, a network device). To understand this embodiment of this application, the following describes a structure of a time-frequency resource of an SSB with reference to FIG. 2.

FIG. 2 is a diagram of a structure of a time-frequency resource of an SSB in NR Rel-15. Refer to FIG. 2. The SSB may include four orthogonal frequency division multiplexing symbols (orthogonal frequency division multiplexing symbol, OS) in time domain and 20 resource blocks (resource block, RB) in frequency domain. For ease of description, the following separately uses OSs #0 to 3 for representing the four OFDMs in time domain, and uses 240 contiguous subcarriers #0 to 239 adjacent in frequency domain for representing the 20 RBs #0 to 19 in frequency domain.

The SSB may include a primary synchronization signal (primary synchronization signal, PSS), a secondary synchronization signal (secondary synchronization signal, SSS), and a physical broadcast channel (physical broadcast channel, PBCH). The PSS and the SSS may be collectively referred to as a synchronization signal. A receiving device may determine a physical cell identifier (physical cell identifier, PCI) by demodulating the PSS and the SSS, to complete cell synchronization and rough symbol-level timing synchronization. The receiving device can perform channel estimation by demodulating a demodulation reference signal (demodulation reference signal, DMRS) carried in the PBCH. The SSS is located on 127 subcarriers (namely, subcarriers #56 to 182) in the middle of the OS #1. The PSS is located on 127 subcarriers (namely, subcarriers #56 to 182) in the middle of the OS #2. The PBCH may be located on 240 subcarriers (namely, subcarriers #0 to 239) of the OS #1 and the OS #3, and some subcarriers (namely, subcarriers #0 to 47 and subcarriers #192 to 239) of the OS #2. The DMRS is located on some subcarriers in the PBCH. For ease of understanding of this embodiment of this application, Table 1 shows a definition manner of the SSB. $k$ represents a number of a subcarrier occupied by one SSB. $l$ represents a number of an OS occupied by one SSB. Being set to 0 (set to 0) represents that the SSB has no resource position to which a resource is mapped. A parameter v is used to determine a resource position of a DMRS PBCH, a value of v is related to the physical cell identifier $N_{\text{ID}}^{\text{cell}}$, and $v = N_{\text{ID}}^{\text{cell}} \bmod 4$, in other words, the value of v is {0, 1, 2, 3}.

Table 1

| Channel or signal (channel or signal) | OS number $l$ | Subcarrier number k |
|---|---|---|
| PSS | 0 | 56, 57, ..., 182 |
| SSS | 2 | 56, 57, ..., 182 |
| Set to 0 | 0 | 0, 1, ..., 55, 183, 184, ..., 239 |
| | 2 | 48, 49, ..., 55, 183, 184, ..., 191 |

(continued)

| Channel or signal (channel or signal) | OS number $l$ | Subcarrier number k |
|---|---|---|
| PBCH | 1, 3 | 0, 1, ..., 239 |
| | 2 | 0, 1, ..., 47, 192, 193, ..., 239 |
| DMRS for PBCH | 1, 3 | $0+ v, 4 + v, 8 + v, ..., 236 + v$ |
| | 2 | $0 +v, 4 + v, 8 + v, ..., 44 + v$ $192+v, 196+v, ..., 236+v$ |

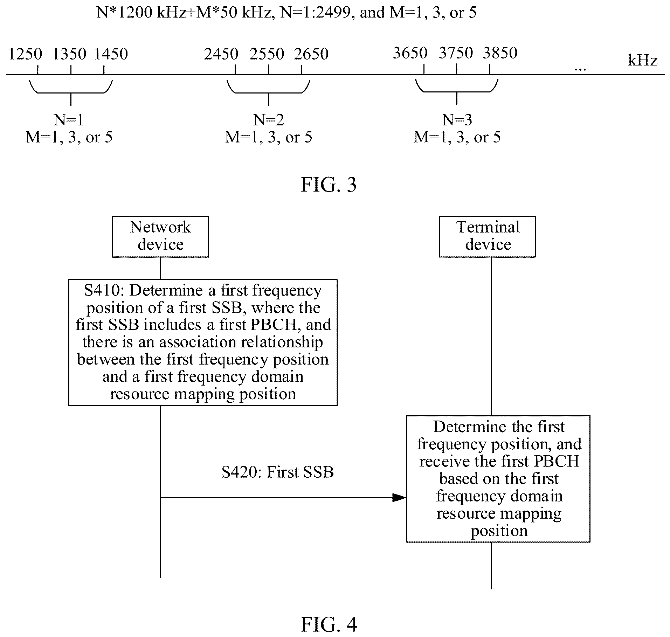

The receiving device may detect, at positions of a plurality of candidate SSB resources, an SSB sent by a sending device. Frequency positions of the plurality of candidate SSB resources may be represented by a synchronization raster. For example, the synchronization raster may be associated with a center subcarrier (for example, a subcarrier #120) of the plurality of candidate SSB resources, and the receiving device may detect the SSB at the frequency positions associated with the synchronization raster. For ease of understanding embodiments of this application, the following describes a synchronization raster with reference to FIG. 3.

FIG. 3 is a diagram of a synchronization raster. The synchronization raster may describe frequency points on a segment of spectrum. For example, a synchronization raster on a spectrum of 0 MHz to 3000 MHz may be represented according to the following formula: SS=N* 1200 kHz+M*50 kHz. A value of N ranges from 1 to 2499, and a value of M is 1, 3, or 5. The frequency points described by the synchronization raster may be associated with a center subcarrier (for example, a subcarrier #120) of a candidate SSB. For example, if an SSB occupies subcarriers #0 to 239, the synchronization raster may describe a frequency corresponding to the subcarrier #120 of the SSB. For example, after being powered on, a terminal device performs blind detection on all synchronization rasters in a supported frequency band. If an SSB is detected at a frequency position of 1350 kHz, the terminal device may determine a position of a center subcarrier of the SSB, to determine a frequency position of the SSB.

With diversification of application scenarios, for example, with emergency of dedicated network scenarios such as a railway mobile radio network and private network operation, some dedicated frequency bands may be configured for a dedicated network system applied to the dedicated network scenario. These dedicated frequency bands may support both an NR system and the dedicated network system. In this scenario, bandwidth that can be used by a network device may be less than 5 MHz. Therefore, a spectrum network whose bandwidth is less than 5 MHz may be defined for these dedicated frequency bands. The spectrum network may be referred to as a dedicated narrowband spectrum network, a dedicated narrowband network, a network whose transmission bandwidth is less than 5 MHz, a network whose maximum transmission bandwidth is less than 5 MHz, a network whose maximum transmission bandwidth is equal to 12 RBs, a network whose maximum transmission bandwidth is equal to 15 RBs, a network whose channel bandwidth is less than 5 MHz, a network whose channel bandwidth is equal to 3 MHz, a network whose transmission bandwidth is equal to 12 RBs, a network whose transmission bandwidth is equal to 15 RBs, a network whose PBCH transmission bandwidth is equal to 12 RBs, or a network whose PBCH transmission bandwidth is equal to 15 RBs, NB-NR, another name defined in the future, or the like. This is not particularly limited in this application. The foregoing descriptions may be alternatively combined. For example, the spectrum network may be referred to as a network whose channel bandwidth is equal to 3 MHz, or a network whose maximum transmission bandwidth is equal to 12 RBs or 15 RBs. For ease of description, the following describes an implementation of this application by using the dedicated narrowband network as an example.

For a dedicated narrowband network with limited bandwidth, the network device may be incapable of completely sending one SSB. For example, for a dedicated narrowband network whose channel bandwidth is equal to 3 MHz, maximum transmission bandwidth supported by the dedicated narrowband network is 15 RBs, and the 15 RBs cannot completely include an SSB that occupies 20 RBs (as shown in FIG. 2). To enable the terminal device to receive an incomplete SSB at a correct resource position, the network device may indicate a frequency domain resource mapping position of the incomplete SSB to the terminal device. However, exchange of this information may occupy an additional transmission resource. This application provides a resource indication method and a communication apparatus, so that transmission resource consumption can be reduced while a resource position is indicated. The following first describes the resource indication method with reference to FIG. 4.

FIG. 4 is a schematic flowchart of a resource indication method according to an embodiment of this application.

S410: A network device determines a first frequency position of a first SSB.

The first SSB includes a first PBCH, the first frequency position is associated with a first frequency domain resource mapping position of the first PBCH, frequency domain bandwidth occupied by the first PBCH is less than first bandwidth, and the first bandwidth is frequency domain bandwidth of a second PBCH. In other words, a terminal device may determine the first frequency domain resource mapping position of the first PBCH based on an association relationship between the first frequency position and the first frequency domain resource mapping position, to correctly receive the first PBCH. In this manner, the first frequency domain resource mapping position of the first PBCH can be indicated without additional signaling exchange, so that transmission resource consumption can be reduced.

In embodiments of this application, for ease of differentiation, terms "first SSB" and "second SSB" represent two SSBs that occupy different frequency domain bandwidth. Frequency domain bandwidth occupied by the first SSB is less than frequency domain bandwidth occupied by the second SSB. The second SSB is an SSB received and decoded by the terminal device based on preset information. For example, the second SSB is an SSB specified in NR Rel-15 shown in FIG. 2. In other words, the first SSB may be an SSB obtained through puncturing or truncation of the second SSB in frequency domain. For example, the second SSB occupies 20 RBs #0 to 19 in frequency domain. For the second SSB, two upper RBs are set to 0 from a lowest frequency position (RBs #0 and 1 are set to 0), and two lower RBs are set to 0 from a highest frequency position (RBs #18 and 19 are set to 0), to generate the first SSB. The first SSB occupies 16 RBs (RBs #2 to 17) in frequency domain. A position that is set to 0 may be referred to as a set-to-0 position (or a puncturing position), and information mapping may not be performed at the set-to-0 position.

It may be understood that the second SSB includes the second PBCH, and frequency domain bandwidth occupied by the second PBCH may cover the frequency domain bandwidth occupied by the second SSB. Similarly, the first SSB includes the first PBCH, and the frequency domain bandwidth occupied by the first PBCH may cover the frequency domain bandwidth occupied by the first SSB. Therefore, that "the frequency domain bandwidth occupied by the first PBCH is less than the frequency domain bandwidth occupied by the second PBCH" and that "the frequency domain bandwidth occupied by the first SSB is less than the frequency domain bandwidth occupied by the second SSB" may represent similar meanings. A set-to-0 position of the first PBCH is a set-to-0 position of the first SSB. For brevity, the following uses the first PBCH and the second PBCH to describe the method provided in this application. However, a person skilled in the art may understand that some of the following descriptions about the first PBCH and the second PBCH may be replaced with descriptions about the first SSB and the second SSB.

Optionally, the set-to-0 position of the first PBCH does not overlap a frequency position occupied by a synchronization signal in the first SSB. In other words, the synchronization signal (including a PSS and an SSS) in the first SSB may be a complete synchronization signal. For example, example descriptions are provided with reference to FIG. 2. Four RBs (namely, the subcarriers #0 to 47) at the lowest frequency position of the second SSB and four RBs (namely, the subcarriers #192 to 239) at the highest frequency position of the second SSB may be set to 0, and the other positions are not set to 0. Therefore, it can be ensured that the synchronization signal is completely sent, and communication reliability is improved. It may be understood that, in this case, the set-to-0 position of the first PBCH is the set-to-0 position of the first SSB.

It may be further understood that different set-to-0 positions may be described as different set-to-0 modes (which may also be referred to as puncturing modes). The terminal device may learn of the set-to-0 position of the first PBCH and the first frequency domain resource mapping position of the first PBCH based on a set-to-0 mode used for the first PBCH. The first frequency domain resource mapping position may be one of a plurality of preset frequency domain resource mapping positions.

The first PBCH may use a plurality of set-to-0 modes. For example, set-to-0 positions of the first PBCH may be contiguous, or may be non-contiguous. For example, the first PBCH may be generated by setting one or more RBs to 0 starting from a lowest frequency position (or a highest frequency position) of the second PBCH, or may be generated by setting one or more RBs to 0 starting from each of a lowest frequency position and a highest frequency position of the second PBCH.

For example, a first PBCH occupying 15 RBs may be generated in the following four set-to-0 modes: 1. setting one upper RB to 0 from the lowest frequency position (setting the RB #0 to 0) and setting four lower RBs to 0 from the highest frequency position (setting RBs #16 to 19 to 0) for a second PBCH occupying 20 RBs in frequency domain; 2. setting two upper RBs to 0 from the lowest frequency position (setting RBs #0 and 1 to 0), and setting three lower RBs to 0 from the highest frequency position (setting RBs #17 to 19 to 0); 3. setting three upper RBs to 0 from the lowest frequency position (setting RBs #0 to 2 to 0), and setting two lower RBs to 0 from the highest frequency position (setting RBs #18 and 19 to 0); and 4. setting four upper RBs to 0 from the lowest frequency position (setting RBs #0 to 3 to 0), and setting one lower RB to 0 from the highest frequency position (setting an RB #19 to 0). For brevity, in the following descriptions, the four set-to-0 modes are collectively referred to as a 15-RB set-to-0 mode. It may be understood that the 15-RB set-to-0 mode may further include other set-to-0 modes. Details are not listed one by one herein.

It should be noted that, for ease of description, the RB #0 is used for representing a 1st RB of an SSB, and the other numbers are described in a similar manner. Details are not described one by one herein. For another example, for the first PBCH occupying 12 RBs, there may be the following one set-to-0 mode: setting four RBs to 0 starting from each of the highest frequency position and the lowest frequency position (setting the RBs #0 to 3 and the RBs #16 to 19 to 0). For ease of differentiation, the set-to-0 mode is referred to as a 12-RB set-to-0 mode below.

It may be understood that a quantity of RBs occupied by the first PBCH in frequency domain is not particularly limited in this embodiment of this application. For example, the first PBCH may alternatively occupy 13, 14, 16, 17, or 19 RBs in frequency domain, and PBCHs occupying different quantities of RBs have different set-to-0 modes, for example, a 13-RB set-to-0 mode and a 14-RB set-to-0 mode. Details are not listed one by one herein.

It may be further understood that a frequency domain unit at the set-to-0 position of the first PBCH may be a resource block RB, a subcarrier, or a resource element (resource element, RE). In other words, 0 may be set for the second PBCH at a granularity of the RB, the subcarrier, or the RE, to generate the first PBCH. One RB may include 12 subcarriers (or 12 REs) in frequency domain. For example, the four 15-RB set-to-0 modes described above may also be described as follows: 1. setting subcarriers #0 to 11 to 0, and setting the subcarriers #192 to 239 to 0; 2. setting the subcarriers #0 to 23 to 0, and setting subcarriers #204 to 239 to 0; 3. setting subcarriers #0 to 35 to 0, and setting subcarriers #216 to 239 to 0; and 4. setting the subcarriers #0 to 47 to 0, and setting subcarriers #228 to 239 to 0. Details are not described again below. This specification mainly uses the RB as an example for description.

The frequency domain bandwidth occupied by the first PBCH is related to network bandwidth. For example, the first frequency domain resource mapping position may be channel bandwidth (channel bandwidth), transmission bandwidth (transmission bandwidth), maximum transmission bandwidth (maximum transmission bandwidth), or a resource position in PBCH transmission bandwidth. The network bandwidth may be defined based on any one or more of the channel bandwidth, the transmission bandwidth, the maximum transmission bandwidth, and the PBCH transmission bandwidth. For example, there may be a correspondence between the channel bandwidth, the transmission bandwidth, and the maximum transmission bandwidth.

The following lists several possible definitions of the network bandwidth: The channel bandwidth may be 3 MHz. Alternatively, the transmission bandwidth is less than 5 MHz. Alternatively, the transmission bandwidth is 12 RBs or 15 RBs. Alternatively, the maximum transmission bandwidth is 15 RBs. Alternatively, the PBCH transmission bandwidth is 12 RBs or 15 RBs. Alternatively, when a subcarrier spacing is 15 kHz, the channel bandwidth is 3 MHz, and the transmission bandwidth (or the maximum transmission bandwidth or the PBCH transmission bandwidth) is 12 RBs, 13 RBs, 14 RBs, or 15 RBs. Alternatively, when a subcarrier spacing is 15 kHz, the channel bandwidth is 5 MHz, and the transmission bandwidth (or the maximum transmission bandwidth or the PBCH transmission bandwidth) is 18 RBs, 19 RBs, or 20 RBs. Alternatively, other definition manners are not listed one by one herein.

It may be understood that the frequency domain bandwidth occupied by the first PBCH (or the set-to-0 position of the first PBCH) may be determined based on the channel bandwidth, the transmission bandwidth, or the maximum transmission bandwidth. For example, if the transmission bandwidth is the 12 RBs, the first frequency domain resource mapping position may be a resource position in the 12 RBs.

The first frequency position of the first SSB is associated with the first frequency domain resource mapping position of the first PBCH. For ease of understanding this embodiment of this application, possible forms of an association relationship between the first frequency position and the first frequency domain resource mapping position are first separately described.

The first frequency position may be a center frequency position of the first SSB, a center subcarrier position of the first SSB, a highest frequency position of the synchronization signal in the first SSB, a lowest frequency position of the synchronization signal in the first SSB, a center subcarrier position of the synchronization signal in the first SSB, or a frequency band number corresponding to the first frequency position.

The first frequency domain resource mapping position may be a highest frequency domain resource mapping position, a lowest frequency domain resource mapping position, or a center frequency domain resource mapping position of the first frequency domain resource mapping position, or the set-to-0 position of the first PBCH.

It may be understood that a frequency position in an association relationship may be represented as a frequency measurement unit like a quantity of RBs, a quantity of REs, a quantity of subcarriers, or a frequency value (in a unit of hertz). This is not particularly limited in this application.

It may be further understood that the first frequency domain resource mapping position may be directly associated with the first frequency position, or the first frequency domain resource mapping position may be associated with the first frequency position based on other information (for example, the channel bandwidth, the transmission bandwidth, the maximum transmission bandwidth, or the PBCH transmission bandwidth).

The network device may obtain the association relationship between the first frequency position and the first frequency domain resource mapping position, and generate the first SSB based on the association relationship and send the first SSB. Therefore, the terminal device receives the first SSB, and may determine the first frequency domain resource mapping position of the first PBCH based on the first frequency position of the first SSB, to correctly obtain the first PBCH. There may be an association relationship between any one or more first frequency positions and any one or more first frequency domain resource mapping positions.

The following lists several possible forms of association relationships:

Form 1: an association relationship between the center subcarrier position of the synchronization signal in the first SSB and the set-to-0 mode of the first PBCH;
Form 2: an association relationship between the center subcarrier position of the synchronization signal in the first SSB and the channel bandwidth (or the transmission bandwidth, the maximum transmission bandwidth, or the PBCH transmission bandwidth), and the set-to-0 mode of the first PBCH;

Form 3: an association relationship between the frequency band number corresponding to the first frequency position and the set-to-0 mode of the first PBCH;

Form 4: an association relationship between the frequency band number corresponding to the first frequency position and the channel bandwidth (or the transmission bandwidth or the maximum transmission bandwidth), and the set-to-0 mode of the first PBCH;

Form 5: an association relationship between the center subcarrier position of the synchronization signal in the first SSB and the frequency band number corresponding to the first frequency position, and the set-to-0 mode of the first PBCH;

Form 6: an association relationship between the highest frequency position of the synchronization signal in the first SSB, the highest frequency domain resource mapping position of the first frequency domain resource mapping position, and the lowest frequency domain resource mapping position of the first frequency domain resource mapping position;

Form 7: an association relationship between the center frequency position (the center subcarrier position) of the synchronization signal in the first SSB, the highest frequency domain resource mapping position of the first frequency domain resource mapping position, and the lowest frequency domain resource mapping position of the first frequency domain resource mapping position;

Form 8: an association relationship between the center frequency position of the synchronization signal in the first SSB, the highest frequency domain resource mapping position of the first frequency domain resource mapping position, and the lowest frequency domain resource mapping position of the first frequency domain resource mapping position;

Form 9: an association relationship between a highest frequency position of the second SSB (an SSB before being set to 0 for the first SSB) corresponding to the first SSB, the highest frequency domain resource mapping position of the first frequency domain resource mapping position, and the lowest frequency domain resource mapping position of the first frequency domain resource mapping position; and

Form 10: an association relationship between a lowest frequency position of the second SSB (an SSB before being set to 0 for the first SSB) corresponding to the first SSB, the highest frequency domain resource mapping position of the first frequency domain resource mapping position, and the lowest frequency domain resource mapping position of the first frequency domain resource mapping position.

For brevity, other possible forms are not listed one by one herein. For the set-to-0 mode, the terminal device and the network device may pre-specify at least one set-to-0 mode, and the terminal device may determine the set-to-0 position of the first PBCH by determining the set-to-0 mode. The following further describes association relationships with reference to examples.

For examples for Form 1:

The center subcarrier position of the synchronization signal in the first SSB may be represented by a synchronization raster. In this application, the synchronization raster may be set in two possible manners:

synchronization raster #1: $SS_{SEF\#1}=Y*f1+Z*f2+X$; and

synchronization raster #2: $SS_{SEF\#2}=S*f3+T$.

For example, the terminal device may determine the center subcarrier position of the synchronization signal in the first SSB from a plurality of frequency positions based on the synchronization raster #1, the synchronization raster #2, or the synchronization raster #1 and the synchronization raster #2. $f_1$ represents a first frequency greater than 0, $f_2$ represents a second frequency greater than 0, $f_3$ represents a third frequency greater than 0, Y, S, and Z are positive integers, and X and T are non-negative integers. Allowed values of Y, Z, X, S, and T may be related to the channel bandwidth, the transmission bandwidth, the maximum transmission bandwidth, or the frequency band number. For example, when the transmission bandwidth is 12 RBs, the terminal device may determine the center subcarrier position based on the synchronization raster #1, where f1 may be 600 kHz, f2 may be 50 kHz, N may be {1:4998}, M may be {1, 3, 5}, and X may be {150 Hz, 300 Hz}. For another example, when the transmission bandwidth is 15 RBs, the terminal device may determine the center subcarrier position based on the synchronization raster #2, where f3 may be 100 kHz, S may be {9202:9232}, {8590:8940}, or {7580:8030} or may be an even number in a range of {9202:9232}, {8590:8940}, or {7580:8030}, and a value of T is less than 100 (for example, may be 0 or 50). For still another example, when the transmission bandwidth is 20 RBs, the terminal device may determine the center subcarrier position based on the synchronization raster #1, where f1 may be 1200 kHz, f2 may be 50 kHz, Y may be {1:2499}, Z may be {1, 3, 5}, and X may be 0.

In other words, when the association relationship relates to the center subcarrier position of the synchronization signal in the first SSB, the first frequency domain resource mapping position (for example, the set-to-0 mode) may be associated by using a value of any one or more parameters of Y, Z, X, S, and T. A specific parameter whose value is associated with the first frequency domain resource mapping position is related to a specific manner of the following three manners that is used by the terminal device to determine the center subcarrier position: Manner 1: determining the center subcarrier position based on the synchronization raster #1; Manner 2: determining the center subcarrier position based on the synchronization raster #2; and Manner 3: determining the center subcarrier position based on the synchronization raster #1 and the synchronization raster #2.

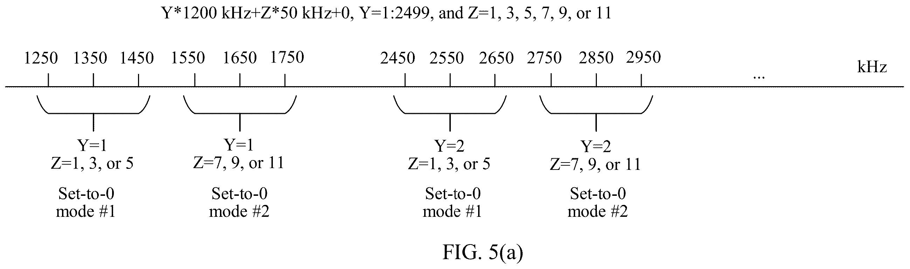

When the terminal device determines the center subcarrier position in Manner 1, a first value of Y and/or a second value of Z may be associated with the first frequency domain resource mapping position (for example, the set-to-0 mode). The following uses an example in which a value of Y and/or a value of Z indicate/indicates two set-to-0 modes: set-to-0 mode #1 (for example, the foregoing 12-RB set-to-0 mode) and set-to-0 mode #2 (for example, one of the foregoing 15-RB set-to-0 modes) for description with reference to FIG. 5(a) to FIG. 5(c).

For example, different values of Z indicate different set-to-0 modes. The first frequency $f_1$=1200 kHz, the second frequency $f_2$=50 kHz, a value of Y ranges from 1 to 2499, and a value of Z is 1, 3, 5, 7, 9, or 11 (it can be learned that, in comparison with the descriptions in FIG. 2, three values of 7, 9, and 11 are added to Z). When the value of Z is 1, 3, or 5, the set-to-0 mode #1 is indicated. When the value of Z is 7, 9, or 11, the set-to-0 mode #2 is indicated. Refer to FIG. 5(a). When the value of Y is 1, and the value of Z is {1, 3, 5}, corresponding three synchronization rasters are {1250 kHz, 1350 kHz, 1450 kHz}. If the terminal device obtains the first SSB on the three synchronization rasters, the terminal device may determine that the set-to-0 mode #1 is used for the first PBCH. When the value of Y is 1, and the value of Z is {7, 9, 11}, corresponding three synchronization rasters are {1550 kHz, 1650 kHz, 1750 kHz}. If the terminal device obtains the first SSB on the three synchronization rasters, the terminal device may determine that the set-to-0 mode #2 is used for the first PBCH.

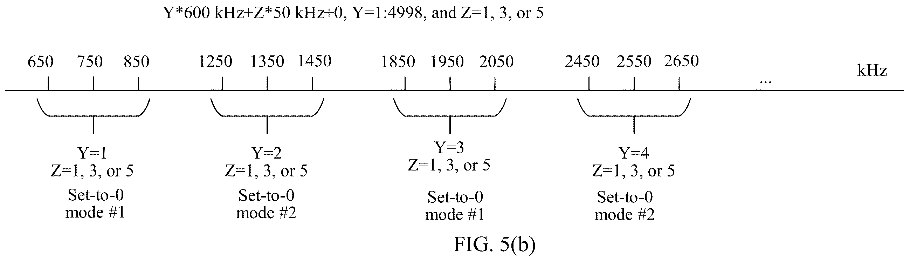

For another example, different values of Y indicate different set-to-0 modes. The first frequency $f_1$=600 kHz, the second frequency $f_2$=50 kHz, the value of Y ranges from 1 to 4998 (it can be learned that, in comparison with the descriptions in FIG. 2, values of 2500 to 4998 are added to Y), and the value of Z is 1, 3, or 5. When the value of Y is an odd number, the set-to-0 mode #1 is indicated. When the value of Y is an even number, the set-to-0 mode #2 is indicated. Refer to FIG. 5(b). When the value of Y is {1, 3}, and the value of Z is {1, 3, 5}, corresponding six synchronization rasters are {650 kHz, 750 kHz, 850 kHz} and {1850 kHz, 1950 kHz, 2050 kHz}. If the terminal device obtains the first SSB on the six synchronization rasters, the terminal device may determine that the set-to-0 mode #1 is used for the first PBCH. When the value of Y is {2, 4}, and the value of Z is {1, 3, 5}, corresponding six synchronization rasters are {1250 kHz, 1350 kHz, 1450 kHz} and {2450 kHz, 2550 kHz, 2650 kHz}. If the terminal device obtains the first SSB on the six synchronization rasters, the terminal device may determine that the set-to-0 mode #2 is used for the first PBCH.

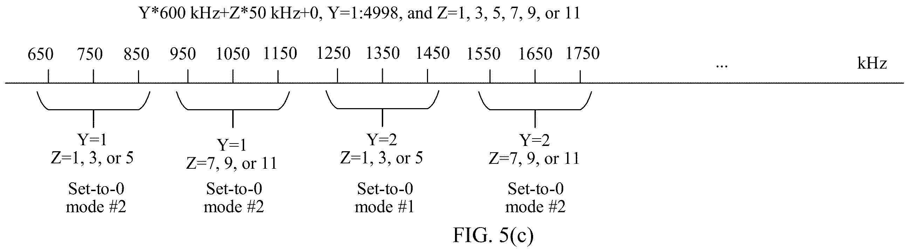

For still another example, different values of Y and Z indicate different set-to-0 modes. The first frequency $f_1$=600 kHz, the second frequency $f_2$=50 kHz, the value of Y ranges from 1 to 4998, and the value of Z is {1, 3, 5, 7, 9, 11}. When Y is an even number, and the value of Z is {1, 3, 5}, the set-to-0 mode #1 is indicated, and the other combination of values of Z and Y indicate the set-to-0 mode #2. Refer to FIG. 5(c). When the value of Y is 2, and the value of Z is {1, 3, 5}, corresponding three synchronization rasters are {1250 kHz, 1350 kHz, 1450 kHz}. If the terminal device obtains the first SSB on the three synchronization rasters, the terminal device may determine that the set-to-0 mode #1 is used for the first PBCH. When the value of Y is 2 and the value of Z is {1, 3, 5}; or when the value of Y is 1 and the value of Z is {1, 3, 5, 7, 9, 11}, corresponding nine synchronization rasters are {650 kHz, 750 kHz, 850 kHz}, {950 kHz, 1050 kHz, 1150 kHz}, and {1550 kHz, 1650 kHz, 1750 kHz}. If the terminal device obtains the first SSB on the nine synchronization rasters, the terminal device may determine that the set-to-0 mode #2 is used for the first PBCH.

It should be noted that the foregoing provides example descriptions for possible association relationships between the value of Y and the value of Z, and the two set-to-0 modes of the first PBCH. A possible value of Y, a possible value of Z, and a quantity of set-to-0 modes are not particularly limited in this application. For example, when there are three or more set-to-0 modes of the first PBCH, different values of Y and Z may be designed based on an idea of embodiments of this application to represent different set-to-0 modes.

When determining the center subcarrier position in Manner 2, the terminal device may determine different set-to-0 modes based on different values of S. For example, when S is an odd number, the set-to-0 mode #1 is indicated. When S is an even number, the set-to-0 mode #2 is indicated. An implementation is similar to that of performing determining in Manner 1. Details are not described herein.

Similarly, when determining the center subcarrier position in Manner 3, if the terminal device obtains the first SSB at a frequency position represented by the synchronization raster #1, the terminal device may determine the set-to-0 mode of the first PBCH based on the value of Y, the value of Z, or a combination of the values of Y and Z. If the terminal device obtains the first SSB at a frequency position represented by the synchronization raster #2, the terminal device may determine the PBCH based on the value of S. Details are not described herein.

For examples for Form 2:
The terminal device may determine the channel bandwidth, the transmission bandwidth, or the maximum transmission bandwidth based on the center subcarrier position of the synchronization signal in the first SSB, and determine the set-to-0 mode based on the channel bandwidth, the transmission bandwidth, or the maximum transmission bandwidth. A quantity of terminals may be used to determine the channel bandwidth, the transmission bandwidth, or the maximum transmission bandwidth in a manner similar to that in the example for Form 1. To be specific, an association relationship between a set-to-0 mode and a value of any one or more of parameters N, M, X, S, and T in the examples for Form 1 is replaced with an association relationship between a value of a parameter and the channel bandwidth, the transmission bandwidth, or the maximum transmission bandwidth. Details are not described again. The following provides examples for a case in which different channel bandwidth, transmission bandwidth, or maximum transmission bandwidth may indicate different set-to-0 modes.

For example, when the channel bandwidth is 3 MHz, the set-to-0 mode #1 is indicated. When the channel bandwidth is 5 MHz, the set-to-0 mode #2 is indicated.

For another example, when the transmission bandwidth is 12 RBs, the set-to-0 mode #1 is indicated. When the transmission bandwidth is 15 RBs, the set-to-0 mode #2 is indicated. Alternatively, when the transmission bandwidth is 3 MHz, the set-to-0 mode #1 is indicated. When the transmission bandwidth is 5 MHz, the set-to-0 mode #2 is indicated.

It may be understood that if the transmission bandwidth is 20 RBs or the channel bandwidth is 5 MHz, the terminal device may consider that the network device sends a complete SSB.

For examples for Form 3:

The association relationship between the frequency band number corresponding to the first frequency position and the set-to-0 mode of the first PBCH.

For example, if the terminal device receives the first SSB on a frequency band n100, the frequency band number corresponding to the first frequency position is n100, and n100 indicates that the set-to-0 mode #1 is used for the first PBCH. If the terminal device receives the first SSB on another frequency band (for example, n26, n28, n56, or n106), the another frequency band number indicates that the set-to-0 mode #2 is used for the first PBCH.

For example, the set-to-0 mode #1 is the 12-RB set-to-0 mode, and the set-to-0 mode #2 is one of the 15-RB set-to-0 modes (for example, the RBs #0 and 1 and the RBs #17 to 19 are set to 0).

For examples for Form 4:

The frequency band number corresponding to the first frequency position indicates the channel bandwidth (or the transmission bandwidth, the maximum transmission bandwidth, or PBCH transmission bandwidth), and each type of channel bandwidth (or the transmission bandwidth, the maximum transmission bandwidth, or the PBCH transmission bandwidth) indicates one set-to-0 mode of the first PBCH.

For example, if the frequency band number n100 indicates that the channel bandwidth is 3 MHz or 5 MHz, the channel bandwidth of 3 MHz indicates a set-to-0 mode. The bandwidth of 5 MHz indicates that the network device sends the complete SSB.

For another example, if the frequency band number n100 indicates that the channel bandwidth is 3 MHz and the transmission bandwidth is 12 RBs, the channel bandwidth is 3 MHz, and the transmission bandwidth of 12 RBs indicates the set-to-0 mode #1 (for example, the 12-RB set-to-0 mode). Alternatively, if the frequency band number n100 indicates that the channel bandwidth is 3 MHz and the transmission bandwidth is 15 RBs, the set-to-0 mode #2 (for example, one of the 15-RB set-to-0 modes) is indicated. If a frequency band number of n26, n28, n56, or n106 indicates that the channel bandwidth is 5 MHz and the transmission bandwidth is 15 RBs, the set-to-0 mode #2 is indicated. Alternatively, if a frequency band number of n26, n28, n56, or n106 indicates that the channel bandwidth is 3 MHz and the transmission bandwidth is 15 RBs, the set-to-0 mode #2 is indicated.

For examples for Form 5:

On a frequency band n100, a center subcarrier of the synchronization signal in the first SSB is determined based on the synchronization raster #1 ($SS_{SEF\#1}=Y*f1+Z*f2+X$) and the synchronization raster #2 ($SS_{SEF\#2}=S*f3+T$). If the synchronization signal is received at a resource position represented by the synchronization raster #1, it indicates that the set-to-0 mode #1 is used for the first PBCH. If the synchronization signal is received at a resource position represented by the synchronization raster #2, it indicates that the set-to-0 mode #2 is used for the first PBCH.

On a frequency band of n26, n28, n56, or n106, the center subcarrier of the first SSB is determined based on the synchronization raster #1 and/or the synchronization raster #2 in a manner similar to that in the example for Form 1, and different values of any one or more parameters of Y, Z, X, S, and T represent different set-to-0 modes.

For examples for Form 6 to Form 10:

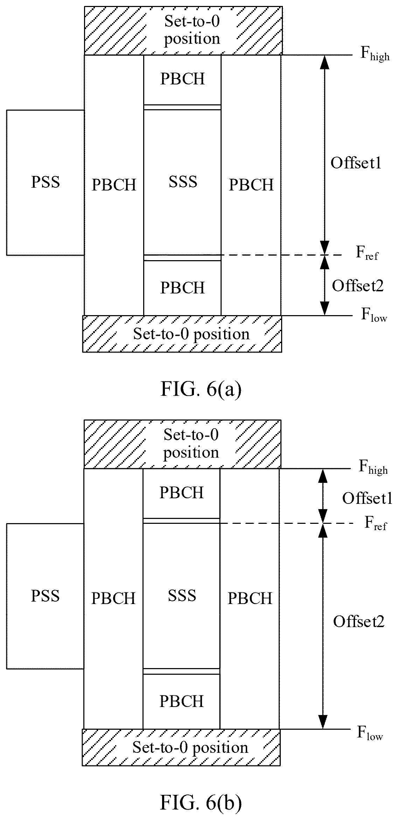

The center frequency position of the synchronization signal in the first SSB, the lowest frequency position of the synchronization signal, the highest frequency position of the synchronization signal, the center frequency position of the first SSB, a lowest frequency position of a conventional SSB corresponding to the first SSB, or a highest frequency position of a conventional SSB corresponding to the first SSB is selected as a reference frequency position $F_{ref}$, and a highest frequency domain resource mapping position and a lowest frequency domain resource mapping position of the first PBCH are determined based on the reference frequency position and at least one offset value. For ease of understanding this embodiment of this application, the following describes this manner with reference to FIG. 6(a) to FIG. 6(e).

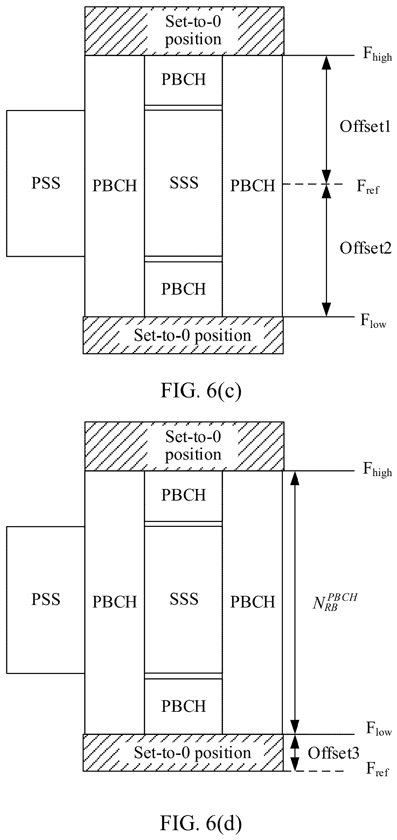

For example, the reference frequency position is the lowest frequency position (refer to FIG. 6(a)), the highest frequency position (refer to FIG. 6(b)), or the center frequency position (refer to FIG. 6(c)) of the synchronization signal in the first SSB, and the first frequency domain resource mapping position $F_{PBCH}$ satisfies $F_{low} \leq F_{PBCH} \leq F_{high}$, where $F_{low}$ represents the lowest frequency domain resource mapping position, and $F_{high}$ represents the highest frequency domain resource mapping position. $F_{high}$ satisfies $F_{high} = F_{ref} + offset1$, and $F_{low}$ satisfies $F_{low} = F_{ref} - offset2$, where offset1 represents a first offset value, and offset2 represents a second offset value. It can be learned that a sum of the first offset value and the second offset value may represent frequency domain bandwidth actually occupied by the first PBCH.

For another example, the reference frequency position is the lowest frequency position of the conventional SSB corresponding to the first SSB (refer to FIG. 6(d)). The conventional SSB is an SSB that is in the first SSB and on which puncturing processing is not performed. The terminal device may determine the lowest frequency position of the conventional SSB based on the center frequency position of the synchronization signal and a format of the conventional SSB. The first frequency domain resource mapping position $F_{PBCH}$ satisfies $F_{low} \leq F_{PBCH} \leq F_{high}$, $F_{low} = F_{ref} + offset3$, and $F_{high} = F_{ref} + offset3 + N_{RB}^{PBCH}$, where $N_{RB}^{PBCH}$ represents the frequency domain bandwidth actually occupied by the first PBCH. Alternatively, the reference frequency position is the highest frequency position of the conventional SSB corresponding to the first SSB, $F_{high} = F_{ref} - offset4$, and $F_{low} = F_{ref} - offset4 - N_{RB}^{PBCH}$.

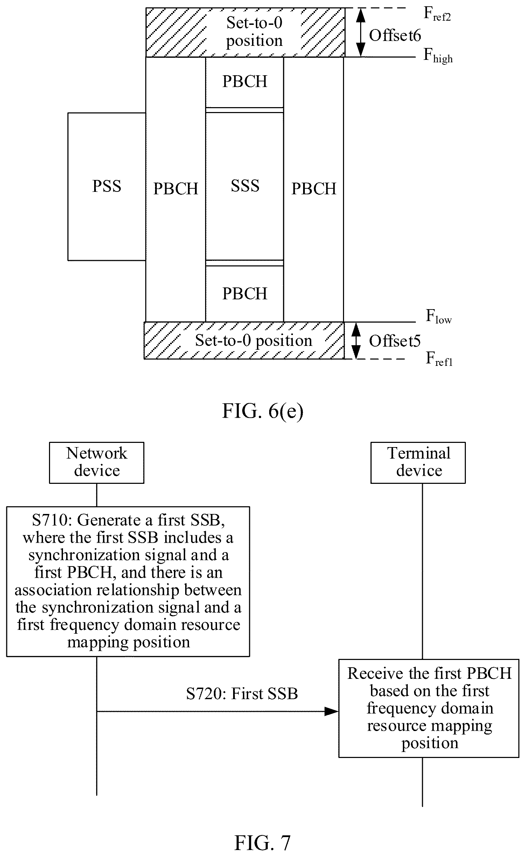

For another example, two reference frequency positions (refer to FIG. 6(e)) may be selected: The lowest frequency position of the conventional SSB corresponding to the first SSB is a first reference frequency position $F_{ref1}$, and the highest frequency position of the conventional SSB is a second reference frequency position $F_{ref2}$. The first frequency domain resource mapping position $F_{PBCH}$ satisfies $F_{low} \leq F_{PBCH} \leq F_{high}$, $F_{low} = F_{ref1} + offset5$, and $F_{high} = F_{ref2} - offset6$.

The foregoing provides example descriptions for the possible forms of the association relationships provided in this embodiment of this application. It may be understood that the forms of the association relationships may be used independently or in combination. When Form 1 and Form 6 are used in combination, there may be an association relationship between the center subcarrier position of the synchronization signal in the first SSB, the highest frequency position of the synchronization signal in the first SSB, the highest frequency domain resource mapping position of the first frequency domain resource mapping position, the lowest frequency domain resource mapping position of the first frequency domain resource mapping position, and the set-to-0 mode of the first PBCH.

Optionally, the first PBCH includes a first PBCH DMRS, frequency domain bandwidth occupied by the first PBCH DMRS is less than second bandwidth, the second bandwidth is frequency domain bandwidth occupied by a PBCH DMRS in the second PBCH, and a second frequency domain resource mapping position of the first PBCH DMRS is associated with the first frequency position. For example, if the set-to-0 position of the first PBCH includes a subcarrier occupied by the DMRS for PBCH shown in Table 1, when the terminal device determines the first frequency domain resource mapping position of the first PBCH based on the first frequency position, the terminal device may further determine the second frequency domain resource mapping position of the PBCH DMRS in the first PBCH based on the first frequency position. A manner in which the second frequency domain resource mapping position is associated with the first frequency position is similar to the foregoing manner in which the first frequency domain resource mapping position is associated with the first frequency position. Details are not described herein.

To understand this embodiment of this application, Table 2 shows numbers of subcarriers that may be occupied by a synchronization signal and a PBCH in an SSB. Table 2 is described below by using frequency positions and offset values represented as quantities of subcarriers (FIG. 6(e) is used as an example). A subcarrier number corresponding to the first reference frequency position $F_{ref1}$ is 0, a subcarrier number corresponding to the second reference frequency position is 239, offset4 is represented by m1, and offset5 is represented by m2.

Table 2

| Channel or signal (channel or signal) | OS number *l* | Subcarrier number *k* |
|---|---|---|
| PSS | 0 | 56, 57, ..., 182 |
| SSS | 2 | 56, 57, ..., 182 |
| Set to 0 | 0 | 0, 1, ..., 55, 183, 184, ..., 239 |
| | 2 | 48, 49, ..., 55, 183, 184, ..., 191 m1, ..., 47, 192, ..., m2 only for TBW<5 MHz |
| | 1, 3 | 0, 1, ..., m1-1, m2+1, m2+2, ..., 239 only for TBW<5 MHz |

(continued)

| Channel or signal (channel or signal) | OS number *l* | Subcarrier number *k* |
|---|---|---|
| PBCH | 1, 3 | If TBW<5 MHz, m1, m1+1, ..., m2-1, m2, otherwise, 0, 1, ..., 239 |
| | 2 | If TBW<5 MHz, m1, m1+1, ..., 47, 192, ..., m2-1, m2, otherwise, 0, 1, ..., 47, 192, 193, ..., 239 |
| **DMRS** for **PBCH** | 1, 3 | If TBW<5 MHz, [m1/4] * 4+v, [m1/4] * 4 + 4+v, ..., [m2/4]* 4-4+v, [m2/4] * 4+v, otherwise, 0+v,4+v,8+v, ...,236+v |
| | 2 | If TBW<5 MHz, [m1/4] * 4+v, [m1/4] * 4+4+v, ..., 44+v, 192+v, ..., [m2/4] * 4 - 4 +v, [m2/4] * 4 *+v,* otherwise, 0+v,4+v,8+v, ...,44+v 192+v,196+v, ...,236+v |

TBW is the transmission bandwidth, and may be replaced with the PBCH transmission bandwidth.

For example, Table 3 shows numbers of subcarriers that may be occupied by the synchronization signal and the PBCH in the 12-RB set-to-0 mode.

Table 3

| Channel or signal (channel or signal) | OS number *l* | Subcarrier number *k* |
|---|---|---|
| PSS | 0 | 56, 57, ..., 182 |
| SSS | 2 | 56, 57, ..., 182 |
| Set to 0 | 0 | 0, 1, ..., 55, 183, 184, ..., 239 |
| | 2 | 0, 1, ..., 55, 183, ..., 239 |
| | 1, 3 | 0, 1, ..., 47, 193, 194, ..., 239 |
| PBCH | 1, 3 | 48, 49, ..., 191, 192 |
| | 2 | 0, 1, ..., 47, 192, 193, ..., 239 |
| DMRS for PBCH | 1, 3 | 48+v, 52+v, ..., 188+v, 192+v |

S420: The network device sends the first SSB to the terminal device at the first frequency position.

Correspondingly, the terminal device receives the first SSB from the network device. The terminal device may determine the first frequency position of the first SSB, and receive the first PBCH based on the first frequency domain resource mapping position.

For example, the terminal device may detect the first frequency position of the first SSB, and determine the first frequency domain resource mapping position of the first PBCH based on the association relationship between the first frequency position and the first frequency domain resource mapping position, to correctly receive an incomplete first PBCH based on the first frequency domain resource mapping position. If the first PBCH DMRS in the first PBCH also includes a set-to-0 position, the terminal device may further determine the second frequency domain resource mapping position of the first PBCH DMRS. For how the terminal device determines the first frequency domain resource mapping position based on the first frequency position, refer to the related descriptions in step S410. Details are not described herein.

Based on this technical solution, the terminal device may determine the first frequency domain resource mapping position of the first PBCH based on the association relationship between the first frequency position and the first frequency domain resource mapping position, to correctly receive the first PBCH. In this manner, the first frequency domain resource mapping position of the first PBCH can be indicated without the need of the additional signaling exchange, so that the transmission resource consumption can be reduced.

FIG. 4 to FIG. 6(e) above describe the method for determining the first frequency domain resource mapping position of the first PBCH. The terminal device may determine the first frequency domain resource mapping position of the first PBCH based on the first frequency domain resource mapping position of the first SSB, without the need of the additional signaling exchange. This application further provides another method for determining a first frequency domain resource mapping position of a first PBCH. A terminal device may determine the first frequency domain resource mapping position of the first PBCH based on a synchronization signal in a first SSB. In this manner, additional signaling exchange may not be needed, either, so that transmission resource consumption can be reduced. The following describes this in detail with reference to FIG. 7.

FIG. 7 is a schematic flowchart of another resource indication method according to an embodiment of this application.

S710: A network device generates a first SSB.

The first SSB includes a first PBCH and a synchronization signal. In a possible manner, the synchronization signal is associated with a first frequency domain resource mapping position of the first PBCH, frequency domain bandwidth occupied by the first PBCH is less than first bandwidth, and the first bandwidth is frequency domain bandwidth of a second PBCH. In other words, a terminal device may determine the first frequency domain resource mapping position of the first PBCH based on an association relationship between the first frequency domain resource mapping position and the synchronization signal, to correctly receive the first PBCH. In this manner, the first frequency domain resource mapping position of the first PBCH can be indicated without additional signaling exchange, so that transmission resource consumption can be reduced. In another possible manner, a DMRS signal of the first PBCH is associated with a first frequency domain resource mapping position of the first PBCH, frequency domain bandwidth occupied by the first PBCH is less than first bandwidth, and the first bandwidth is frequency domain bandwidth of a second PBCH.

That the DMRS signal of the first PBCH is associated with the first frequency domain resource mapping position of the first PBCH includes:

An initial value corresponding to a generation sequence of the DMRS is associated with a first parameter, and the first parameter indicates the first frequency domain resource mapping position of the first PBCH.

In a possible implementation, the initial value $c_{init}$ of the generation sequence of the DMRS satisfies:

$$c_{init} = 2^A * (k + B) + 2^{11}\left(\bar{i}_{SSB} + 1\right)\left(\left\lfloor N_{ID}^{cell}/4 \right\rfloor + 1\right) + 2^6\left(\bar{i}_{SSB} + 1\right) + \left(N_{ID}^{cell} \bmod 4\right).$$

A is 2, 3, 4, 5, 22, 23, 24, 25, 26, 27, 28, 29, 30, or 31, B is 0 or 1, k is the first parameter, and $\bar{i}_{SSB} = i_{SSB} + 4n_{hf}$. $n_{hf}$ is a number of a half-frame in which transmission of the first PBCH is performed, $n_{hf} = 0$, representing a 1st half-frame in one frame, and $n_{hf} = 0$, representing a 2nd half-frame in one frame. $i_{SSB}$ is two least significant bits (two least significant bits) of an SSB index. $N_{ID}^{cell}$ is a physical layer cell identifier.

The generation sequence of the DMRS is generated based on the initial value in a manner of generating a Gold sequence whose length is 31. For the manner of generating the Gold sequence whose length is 31, refer to descriptions in section 5.2.1 in 3GPP TS 38.211 V15.8. Details are not described herein.

For descriptions of the first SSB, the first PBCH, a second SSB, and the second PBCH, refer to the descriptions in step S410 in FIG. 4. Details are not described herein.

The frequency domain bandwidth occupied by the first PBCH is related to network bandwidth. The first frequency domain resource mapping position may be a resource position in channel bandwidth, transmission bandwidth, or maximum transmission bandwidth. For descriptions of the network bandwidth, refer to the descriptions in step S410 in FIG. 4. Details are not described herein.

It may be understood that the synchronization signal in the first SSB may indicate a first physical cell identifier corresponding to the first SSB. In this embodiment of this application, the synchronization signal may be reused, so that the synchronization signal has two functions of indicating a physical cell identifier and indicating a frequency domain resource mapping position of a PBCH.

The synchronization signal in the first SSB is associated with the first frequency domain resource mapping position of the first PBCH. For descriptions of the mapping position of the first frequency domain resource, refer to the descriptions in step S410 in FIG. 4. Details are not described herein. The following uses a set-to-0 mode of the first PBCH as an example for description. The synchronization signal may include a first synchronization signal and a second synchronization signal, and the first synchronization signal and the second synchronization signal may be an SSS and a PSS respectively. In this embodiment of this application, the SSS and the PSS are used as examples to describe possible association manners between the synchronization signal and the first frequency domain resource mapping position.

Manner A:

The PSS is associated with the frequency domain resource mapping position of the first PBCH, and the SSS is associated with the first physical cell identifier.

For example, a primary synchronization sequence $N_{ID}^{(2)}$ corresponding to the PSS has three values of {0, 1, 2}, and the three values may indicate three different set-to-0 modes respectively. A secondary synchronization sequence $N_{ID}^{(1)}$ corresponding to the SSS has a total of 336 values of {0, 1, 2, ..., 335}, and the 336 values may indicate 336 physical cell identifiers respectively. For example, the physical cell identifier $N_{ID}^{CELL}$ may be determined according to the following formula: $N_{ID}^{CELL} = k * N_{ID}^{(1)} + \alpha$, where a value of a parameter k may be {1, 2, 3}, and a value of a parameter $\alpha$ may be {1, 2, 3}. For example, when k is 1, and $\alpha$ is 0, the physical cell identifier may be determined according to the following formula: $N_{ID}^{CELL} = N_{ID}^{(1)}$, where $N_{ID}^{(1)} \epsilon (0, 1, ..., 335)$. The value of the parameter k and the value of the parameter $\alpha$ may be preset, or may be indicated by the network device to the terminal device. Therefore, the terminal device obtains the synchronization signal, may learn of the first physical cell identifier corresponding to the first SSB based on the SSS, and learn of, based on the PSS, a specific set-to-0 mode used for a physical cell.

Manner B:

The PSS is associated with the frequency domain resource mapping position of the first PBCH, and the SSS and the PSS are associated with the first physical cell identifier.

For example, a secondary synchronization sequence $N_{ID}^{(1)}$ corresponding to the SSS has a total of 336 values of {0, 1, 2, ..., 335}, and the 336 values may indicate at most 336 set-to-0 modes. When a quantity of possible set-to-0 modes of a PBCH is less than 336, the 336 values may indicate set-to-0 modes in a grouping manner. For example, when the possible set-to-0 modes of the PBCH are two set-to-0 modes of a set-to-0 mode #1 and a set-to-0 mode #2, the 336 values may be divided into two groups. One group of values indicates the set-to-0 mode #1, and the other group of values indicates the set-to-0 mode #2. The physical cell identifier $N_{ID}^{CELL}$ may be determined according to the following formula: $N_{ID}^{CELL} = 3N_{ID}^{(1)} + N_{ID}^{(2)}$, and a primary synchronization sequence $N_{ID}^{(2)}$ corresponding to the PSS has three values of {0, 1, 2}. It may be understood that when the PBCH has a plurality of set-to-0 modes, a group of values of $N_{ID}^{(1)}$ may represent a same set-to-0 mode, and different values in the group of values may represent different physical cell identifiers. Correspondingly, the group of values for the formula may represent a same physical cell identifier, and different values in a same group of values may represent different set-to-0 modes.

A grouping manner of values is not particularly limited in this application. In a first possible grouping manner, the PBCH has P set-to-0 modes, and P is a positive integer. The following uses Pi to represent a (Pi+1)th set-to-0 mode in the P set-to-0 modes, and a value of Pi is one of 0 to P-1. The terminal device may determine the set-to-0 mode of the first PBCH according to $Pi = N_{ID}^{(1)} \bmod P$, and determine the first physical cell identifier according to $N_{ID}^{CELL} = 3(N_{ID}^{(1)} - Pi + j) + N_{ID}^{(2)}$, where a value of j is one of 0 to P-1, and the value of j may be preset by the terminal device or indicated by the network device. In other words, for example, when the PBCH has the two set-to-0 modes of the set-to-0 mode #1 and the set-to-0 mode #2, $N_{ID}^{(1)}$ includes two groups of values: {0, 2, ..., 334} and {1, 3, ..., 335}. The two groups of values respectively represent the set-to-0 mode #1 and the set-to-0 mode #2. Values at a same position in the two groups of values may represent a same physical cell identifier. For example, {0,1}, {2, 3}, {4, 5}, and the like may separately represent a same physical cell identifier. j may be used to determine a specific value in {0, 1}, {2, 3}, {4, 5}, and the like to determine the first physical cell identifier. For example, if j is 0, it indicates that a 1st value of two values is used to determine the first physical cell identifier. If j is 1, it indicates that a 2nd value of the two values is used to determine the first physical cell identifier.

In a second possible grouping manner, the PBCH has P set-to-0 modes, and P is a positive integer. The following uses Pi to represent a (Pi+1)th set-to-0 mode in the P set-to-0 modes, and a value of Pi is one of 0 to P-1. The terminal device may determine the set-to-0 mode of the first PBCH according to $Pi = \left\lfloor N_{ID}^{(1)} / \left( \left\lfloor \frac{336}{P} \right\rfloor \right) \right\rfloor$, and determine the first physical cell identifier according to $N_{ID}^{CELL} = 3(N_{ID}^{(1)} - Pi + \left\lfloor \frac{336}{P} \right\rfloor \times m) + N_{ID}^{(2)}$, where a value of m is one of 0 to P-1, and the value of m may be preset by the terminal device or indicated by the network device. In other words, for example, when the PBCH has the two set-to-0 modes of the set-to-0 mode #1 and the set-to-0 mode #2, $N_{ID}^{(1)}$ includes two groups of values: {0, 1, ..., 167} and {168, 169, ..., 335}. The two groups of values respectively represent the set-to-0 mode #1 and the set-to-0 mode #2. Values at a same position in the two groups of values may represent a same physical cell identifier. For example, {0, 168}, {1, 169}, {2, 170}, and the like may separately represent a same physical cell identifier. m may be used to determine a specific value in {0, 1}, {2, 3}, {4, 5}, and the like to determine the first physical cell identifier. For example, if m is 0, it indicates that a 1st value of two values is used to determine the first physical cell identifier. If m is 1, it indicates that a 2nd value of the two values is used to determine the first physical cell identifier.

In a third possible grouping manner, the PBCH has P set-to-0 modes, and P is a positive integer. The following uses Pi to represent a (Pi+1)$^{th}$ set-to-0 mode in the P set-to-0 modes, and a value of Pi is one of 0 to P-1. The terminal device may determine the set-to-0 mode of the first PBCH according to $Pi = N_{ID}^{(1)} \bmod P$. In other words, for example, when the PBCH has the two set-to-0 modes of the set-to-0 mode #1 and the set-to-0 mode #2, $N_{ID}^{(1)}$ includes two groups of values: {0, 1, ..., 167} and {168, 169, ..., 335}. The two groups of values respectively represent the set-to-0 mode #1 and the set-to-0 mode #2. $\left\lfloor N_{ID}^{(1)} / \left( \left\lfloor \frac{336}{P} \right\rfloor \right) \right\rfloor = Pi$ represents a same physical cell identifier. For example, {0, 2, ..., 334} and {1, 3, ..., 335} respectively represent two physical cell identifiers of an identifier #1 and an identifier #2. A specific value that is in 168 values of each of {0, 2, ..., 334} and {1, 3, ..., 335} and that is used to determine an actual physical cell identifier may be determined by the terminal device through preconfiguration or based on an indication of the network device.

In a fourth possible grouping manner, the PBCH has P set-to-0 modes, and P is a positive integer. The following uses Pi to represent a (Pi+1)$^{th}$ set-to-0 mode in the P set-to-0 modes, and a value of Pi is one of 0 to P-1. The terminal device may determine the set-to-0 mode of the first PBCH according to $Pi = \left\lfloor N_{ID}^{(1)} / \left( \left\lfloor \frac{336}{P} \right\rfloor \right) \right\rfloor$. In other words, for example, when the PBCH has the two set-to-0 modes of the set-to-0 mode #1 and the set-to-0 mode #2, $N_{ID}^{(1)}$ includes two groups of values: {0, 2, ..., 334} and {1, 3, ..., 335}. The two groups of values respectively represent the set-to-0 mode #1 and the set-to-0 mode #2. $N_{ID}^{(1)} \bmod P = Pi$ represents a same physical cell identifier. For example, {0, 1, ..., 167} and {168, 169, ..., 335} respectively represent two physical cell identifiers of an identifier #1 and an identifier #2. A specific value that is in 168 values of each of {0, 1, ..., 167} and {168, 169, ..., 335} and that is used to determine an actual physical cell identifier may be determined by the terminal device through preconfiguration or based on an indication of the network device.

Manner C:

The first synchronization signal and the second synchronization signal are associated with a frequency domain resource of the first PBCH, and the first synchronization signal and the second synchronization signal are associated with the first physical cell identifier.

For example, a secondary synchronization sequence $N_{ID}^{(1)}$ corresponding to the SSS has a total of 336 values of {0, 1, 2, ..., 335}, a primary synchronization sequence $N_{ID}^{(2)}$ has three values of {0, 1, 2}, and $3N_{ID}^{(1)} + N_{ID}^{(2)}$ has a total of 1,008 values, where the 1,008 values may indicate at most 1,008 set-to-0 modes. When a quantity of possible set-to-0 modes of a PBCH is less than 1,008, the 1,008 values may indicate set-to-0 modes in a grouping manner. The physical cell identifier $N_{ID}^{CELL}$ may be determined according to the following formula: $N_{ID}^{CELL} = 3N_{ID}^{(1)} + N_{ID}^{(2)}$. When the PBCH has a plurality of set-to-0 modes, a group of values of $N_{ID}^{(1)}$ may represent a same set-to-0 mode, and different values in the group of values may represent different physical cell identifiers. Correspondingly, the group of values for the formula may represent a same physical cell identifier, and different values in a same group of values may represent different set-to-0 modes. The grouping manner is similar to the grouping manner described in Manner B. This is briefly described below.

In a first possible grouping manner, the PBCH has P set-to-0 modes, and P is a positive integer. The following uses Pi to represent a (Pi+1)$^{th}$ set-to-0 mode in the P set-to-0 modes, and a value of Pi is one of 0 to P-1. The terminal device may determine the set-to-0 mode of the first PBCH according to $Pi = (3N_{ID}^{(1)} + N_{ID}^{(2)}) \bmod P$, and determine the first physical cell identifier according to $N_{ID}^{CELL} = 3(N_{ID}^{(1)} - Pi + j) + N_{ID}^{(2)}$, where a value of j is one of 0 to P-1, and the value of j may be preset by the terminal device or indicated by the network device.

In a second possible grouping manner, the PBCH has P set-to-0 modes, and P is a positive integer. The following uses Pi to represent a (Pi+1)$^{th}$ set-to-0 mode in the P set-to-0 modes, and a value of Pi is one of 0 to P-1. The terminal device may determine the set-to-0 mode of the first PBCH according to $Pi = \left\lfloor (3N_{ID}^{(1)} + N_{ID}^{(2)}) / \left( \left\lfloor \frac{1,008}{P} \right\rfloor \right) \right\rfloor$, and determine the first physical cell identifier according to $N_{ID}^{CELL} = 3((3N_{ID}^{(1)} + N_{ID}^{(2)}) - Pi + \left\lfloor \frac{1,008}{P} \right\rfloor \times m) + N_{ID}^{(2)}$, where a value of m is one of 0 to P-1, and the value of m may be preset by the terminal device or indicated by the network device.

In a third possible grouping manner, the PBCH has P set-to-0 modes, and P is a positive integer. The following uses Pi to represent a (Pi+1)$^{th}$ set-to-0 mode in the P set-to-0 modes, and a value of Pi is one of 0 to P-1. The terminal device may determine the set-to-0 mode of the first PBCH according to $Pi = (3N_{ID}^{(1)} + N_{ID}^{(2)}) \bmod P$.

$$\left\lfloor (3N_{ID}^{(1)} + N_{ID}^{(2)})/\left(\left\lceil \frac{1,008}{P} \right\rceil\right)\right\rfloor = Pi$$ represents a same physical cell identifier.

In a fourth possible grouping manner, the PBCH has P set-to-0 modes, and P is a positive integer. The following uses Pi to represent a (Pi+1)$^{th}$ set-to-0 mode in the P set-to-0 modes, and a value of Pi is one of 0 to P-1. The terminal device may determine the set-to-0 mode of the first PBCH according to $$Pi = \left\lfloor (3N_{ID}^{(1)} + N_{ID}^{(2)})/\left(\left\lceil \frac{1,008}{P} \right\rceil\right)\right\rfloor .$$

$$(3N_{ID}^{(1)} + N_{ID}^{(2)}) \bmod P = Pi$$ represents a same physical cell identifier.

It should be noted that a first frequency position may directly or indirectly indicate a manner of the first frequency domain resource mapping position. For example, the first frequency position is associated with the channel bandwidth, the transmission bandwidth, or the maximum transmission bandwidth. The terminal device may determine the channel bandwidth, the transmission bandwidth, or the maximum transmission bandwidth based on the first frequency position, and determine the first frequency domain resource mapping position based on the channel bandwidth, the transmission bandwidth, or the maximum transmission bandwidth. For example, the terminal device obtains the synchronization signal. Different synchronization signals may represent different channel bandwidth, transmission bandwidth, or maximum transmission bandwidth, and different channel bandwidth, transmission bandwidth, or maximum transmission bandwidth may represent different set-to-0 modes of the PBCH. That the different synchronization signals may represent the different channel bandwidth is similar to the mapping manner described above. For example, some specific values of the synchronization signal represent that the channel bandwidth is 3 MHz, and that the channel bandwidth is 3 MHz represents the set-to-0 mode #1; and some other specific values of the synchronization signal represent that the channel bandwidth is 5 MHz, and that the channel bandwidth is 5 MHz represents the set-to-0 mode #2. For brevity, details are not described herein.

It should be further noted that the manner of indicating the first frequency domain resource mapping position by using the synchronization signal in FIG. 7 may be used independently, or may be used in combination with the manner shown in FIG. 4. For example, the terminal device may determine highest and lowest frequency domain resource mapping positions of the first frequency domain resource mapping position in the manner shown in FIG. 4, and determine the set-to-0 position in the manner of indicating the first frequency domain resource mapping position by using the synchronization signal in FIG. 7, to correctly receive the first PBCH.

Optionally, the first PBCH includes a first PBCH DMRS, frequency domain bandwidth occupied by the first PBCH DMRS is less than second bandwidth, the second bandwidth is frequency domain bandwidth occupied by a PBCH DMRS in the second PBCH, and a second frequency domain resource mapping position of the first PBCH DMRS is associated with the synchronization signal. For example, if the set-to-0 position of the first PBCH includes a subcarrier occupied by the DMRS for PBCH shown in Table 1, when the terminal device determines the first frequency domain resource mapping position of the first PBCH based on the synchronization signal, the terminal device may further determine the second frequency domain resource mapping position of the PBCH DMRS in the first PBCH based on the synchronization signal. A manner in which the second frequency domain resource mapping position is associated with the synchronization signal is similar to the foregoing manner in which the first frequency domain resource mapping position is associated with the synchronization signal. Details are not described herein.

S720: The network device sends the first SSB to the terminal device at the first frequency position.

Correspondingly, the terminal device receives the first SSB from the network device. The terminal device may determine the synchronization signal in the first SSB, and receive the first PBCH based on the first frequency domain resource mapping position.

For example, the terminal device may obtain the synchronization signal in the first SSB, and determine the first frequency domain resource mapping position of the first PBCH based on an association relationship between the synchronization signal and the first frequency domain resource mapping position, to correctly receive an incomplete first PBCH based on the first frequency domain resource mapping position. For how the terminal device determines the first frequency domain resource mapping position based on the synchronization signal, refer to the related descriptions in step S410. Details are not described herein.

Based on this technical solution, the terminal device may determine the first frequency domain resource mapping position of the first PBCH based on the association relationship between the synchronization signal and the first frequency domain resource mapping position, to correctly receive the first PBCH. In this manner, the first frequency domain resource mapping position of the first PBCH can be indicated without the need of the additional signaling exchange, so that the transmission resource consumption can be reduced.

Corresponding to the methods provided in the foregoing method embodiments, embodiments of this application further provide corresponding apparatuses. The apparatuses include corresponding modules configured to perform the foregoing method embodiments. The module may be software, hardware, or a combination of software and hardware. It may be understood that technical features described in the foregoing method embodiments are also applicable to the following apparatus embodiments. Therefore, for content that is not described in detail, refer to the foregoing method embodiments. For brevity, details are not described herein again.

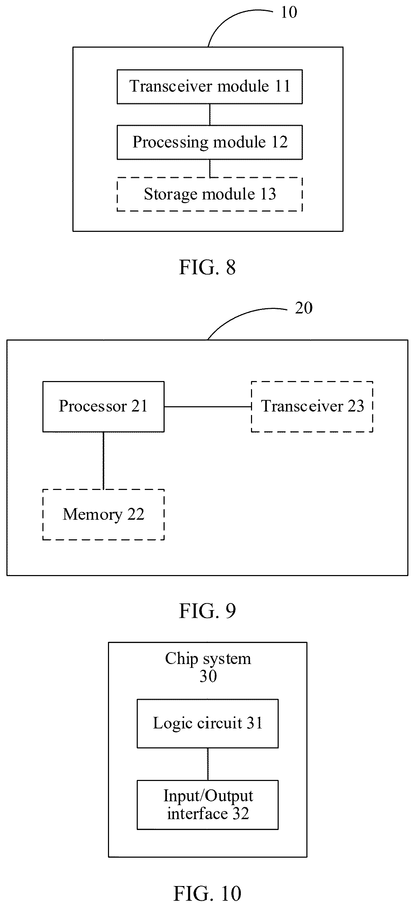

FIG. 8 is a schematic block diagram of a communication apparatus 10 according to an embodiment of this application. The apparatus 10 includes a transceiver module 11 and/or a processing module 12. The transceiver module 11 may implement a corresponding communication function, and the processing module 12 is configured to perform data processing, or the transceiver module 11 is configured to perform receiving and sending-related operations, and the processing module 12 is configured to perform an operation other than the receiving and sending operations. The transceiver module 11 may also be referred to as a communication interface or a communication unit.

Optionally, the apparatus 10 may further include a storage module 13. The storage module 13 may be configured to store instructions and/or data. The processing module 12 may read the instructions and/or the data in the storage module, to cause the apparatus to implement an action of the device or the network element in the foregoing method embodiments.

In a first design, the apparatus 10 may correspond to the terminal device in the foregoing method embodiments, or may be a component (for example, a chip) of the terminal device.

The apparatus 10 may implement the corresponding steps or procedures performed by the terminal device in the foregoing method embodiments. The transceiver module 11 may be configured to perform the receiving and sending-related operations of the terminal device in the foregoing method embodiments. The processing module 12 may be configured to perform the processing-related operations of the terminal device in the foregoing method embodiments.

In a possible implementation, the apparatus 10 may implement the steps or the procedures performed by the terminal device in the embodiment shown in FIG. 4. The processing module 12 is configured to determine a first frequency position of a first synchronization signal and physical broadcast channel block SSB, where the first SSB includes a first physical broadcast channel PBCH, the first frequency position is associated with a first frequency domain resource mapping position of the first PBCH, frequency domain bandwidth occupied by the first PBCH is less than first bandwidth, and the first bandwidth is frequency domain bandwidth of a second PBCH. The transceiver module 11 is configured to receive the first PBCH based on the first frequency domain resource mapping position.

In another possible implementation, the apparatus 10 may implement the steps or the procedures performed by the terminal device in the embodiment shown in FIG. 7. The processing module 12 is configured to obtain a synchronization signal of a first synchronization signal and physical broadcast channel block SSB, where the first SSB includes a first physical broadcast channel PBCH, a synchronization sequence is associated with a first frequency domain resource mapping position of the first PBCH, frequency domain bandwidth occupied by the first PBCH is less than first bandwidth, and the first bandwidth is frequency domain bandwidth of a second PBCH. The transceiver module 11 is configured to receive the first PBCH based on the first frequency domain resource mapping position.

In a second design, the apparatus 10 may correspond to the network device in the foregoing method embodiments, or may be a component (for example, a chip) of the network device.

The apparatus 10 may implement the corresponding steps or procedures performed by the network device in the foregoing method embodiments. The transceiver module 11 may be configured to perform the receiving and sending-related operations of the network device in the foregoing method embodiments. The processing module 12 may be configured to perform the processing-related operations of the network device in the foregoing method embodiments.

In a possible implementation, the apparatus 10 may implement the steps or the procedures performed by the network device in the embodiment shown in FIG. 4. The processing module 12 is configured to determine a first frequency position of a first synchronization broadcast signal block SSB, where the first SSB includes a first physical broadcast channel PBCH, the first frequency position is associated with a first frequency domain resource mapping position of the first PBCH, frequency domain bandwidth occupied by the first PBCH is less than first bandwidth, and the first bandwidth is frequency domain bandwidth of a second PBCH. The transceiver module 1 is configured to send the first SSB at the first frequency position.

In another possible implementation, the apparatus 10 may implement the steps or the procedures performed by the network device in the embodiment shown in FIG. 7. The processing module 12 is configured to generate a first synchronization signal and physical broadcast channel block SSB, where the first SSB includes a first physical broadcast channel PBCH and a synchronization signal, the synchronization signal is associated with a first frequency domain resource mapping position of the first PBCH, frequency domain bandwidth occupied by the first PBCH is less than first bandwidth, and the first bandwidth is frequency domain bandwidth of a second PBCH. The transceiver module 11 is configured to send the first SSB.

It should be understood that specific processes in which the modules perform the foregoing corresponding steps have been described in detail in the foregoing method embodiments. For brevity, details are not described herein again.

It should be further understood that the apparatus 10 herein is embodied in a form of a functional module. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a memory, a combinational logic circuit, and/or another suitable component that supports the described function. In an optional example, a person skilled in the art may understand that the apparatus 10 may be specifically the terminal device in the foregoing embodiments, and may be configured to perform the procedures and/or the steps corresponding to the terminal device in the foregoing method embodiments; or the apparatus 10 may be specifically the network device in the foregoing embodiments, and may be configured to perform the procedures and/or the steps corresponding to the network device in the foregoing method embodiments. To avoid repetition, details are not described herein again.

The apparatus 10 in the foregoing solutions has a function of implementing the corresponding steps performed by the device (for example, the terminal device or the network device) in the foregoing methods. The function may be implemented by hardware, or may be implemented by hardware executing corresponding software. The hardware or the software includes one or more modules corresponding to the foregoing function. For example, the transceiver module may be replaced with a transceiver (for example, a sending unit in the transceiver module may be replaced with a transmitter, and a receiving unit in the transceiver module may be replaced with a receiver), and another unit like the processing module may be replaced with a processor, to respectively perform the receiving and sending operations and the related processing operation in the method embodiments.

In addition, the transceiver module 11 may alternatively be a transceiver circuit (for example, may include a receiving circuit and a sending circuit), and the processing module may be a processing circuit.

FIG. 9 is a diagram of another communication apparatus 20 according to an embodiment of this application. The apparatus 20 includes a processor 21. The processor 21 is configured to: execute a computer program or instructions stored in a memory 22, or read data/signaling stored in the memory 22, to perform the method in the foregoing method embodiments. Optionally, there are one or more processors 21.

Optionally, as shown in FIG. 7, the apparatus 20 further includes the memory 22, and the memory 22 is configured to store the computer program or the instructions and/or the data. The memory 22 may be integrated with the processor 21, or may be disposed separately. Optionally, there are one or more memories 22.

Optionally, as shown in FIG. 7, the apparatus 20 further includes a transceiver 23, and the transceiver 23 is configured to receive and/or send a signal. For example, the processor 21 is configured to control the transceiver 23 to receive and/or send the signal.

In a solution, the apparatus 20 is configured to implement the operations performed by the terminal device in the foregoing method embodiments.

In another solution, the apparatus 20 is configured to implement the operations performed by the network device in the foregoing method embodiments.

It should be understood that, the processor mentioned in embodiments of this application may be a central processing module (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example but not limitation, the RAM includes a plurality of the following forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is the general-purpose processor, the DSP, the ASIC, the FPGA or the another programmable logic device, the discrete gate, the transistor logic device, or the discrete hardware component, the memory (a storage module) may be integrated into the processor.

It should further be noted that the memory described in this specification is intended to include, but is not limited to, these and any other appropriate type of memory.

FIG. 10 is a diagram of a chip system 30 according to an embodiment of this application. The chip system 30 (or may be referred to as a processing system) includes a logic circuit 31 and an input/output interface (input/output interface) 32.

The logic circuit 31 may be a processing circuit in the chip system 30. The logic circuit 31 may be coupled and connected to a storage unit, and invoke instructions in the storage unit, so that the chip system 30 can implement the methods and functions in embodiments of this application. The input/output interface 32 may be an input/output circuit in the chip system 30, and outputs information processed by the chip system 30, or inputs to-be-processed data or signaling information into the chip system 30 for processing.

In a solution, the chip system 30 is configured to implement the operations performed by the terminal device in the foregoing method embodiments. For example, the logic circuit 31 is configured to implement the processing-related operations performed by the terminal device in the foregoing method embodiments; and the input/output interface 32 is configured to implement the sending and/or receiving-related operations performed by the terminal device in the foregoing method embodiments.

In another solution, the chip system 30 is configured to implement the operations performed by the network device in the foregoing method embodiments. For example, the logic circuit 31 is configured to implement the processing-related operations performed by the network device in the foregoing method embodiments; and the input/output interface 32 is configured to implement the sending and/or receiving-related operations performed by the virtualized infrastructure manager in the foregoing method embodiments.

An embodiment of this application further provides a computer-readable storage medium. The computer-readable storage medium stores computer instructions for implementing the method performed by the device in the foregoing method embodiments.

For example, when a computer program is executed by a computer, the computer is caused to implement the method performed by the terminal device in the foregoing method embodiments.

For another example, when a computer program is executed by a computer, the computer is caused to implement the method performed by the network device in the foregoing method embodiments.

An embodiment of this application further provides a computer program product, including instructions. When the instructions are executed by a computer, the method performed by the device (for example, the terminal device, or for another example, the network device) in the foregoing method embodiments is implemented.

An embodiment of this application further provides a communication system, including the foregoing terminal device and network device.

For explanations and beneficial effects of related content in any one of the apparatuses provided above, refer to the corresponding method embodiment provided above. Details are not described herein again.

In the several embodiments provided in this application, it should be understood that the disclosed apparatus and method may be implemented in other manners. For example, the apparatus embodiments described above are merely examples. For example, division into the units is merely logical function division and may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or in another form.

All or a part of the foregoing embodiments may be implemented by software, hardware, firmware, or any combination thereof. When the software is used to implement embodiments, all or a part of embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like. For example, the usable medium may include but is not limited to any medium that can store program code, for example, a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, wherein the method comprises:

determining a first frequency position of a first synchronization signal and physical broadcast channel block SSB, wherein the first SSB comprises a first physical broadcast channel PBCH, the first frequency position is associated with a first frequency domain resource mapping position of the first PBCH, frequency domain bandwidth occupied by the first PBCH is less than first bandwidth, and the first bandwidth is frequency domain bandwidth of a second PBCH; and
receiving the first PBCH based on the first frequency domain resource mapping position.

2. The method according to claim 1, wherein the first frequency domain resource mapping position is a resource position in channel bandwidth, transmission bandwidth, or maximum transmission bandwidth.

3. The method according to claim 1 or 2, wherein the first frequency position is associated with the channel bandwidth, the transmission bandwidth, or the maximum transmission bandwidth.

4. The method according to any one of claims 1 to 3, wherein the first frequency position is associated with at least one of the following: a highest frequency domain resource mapping position of the first frequency domain resource mapping position, a lowest frequency domain resource mapping position of the first frequency domain resource mapping position, a center frequency domain resource mapping position of the first frequency domain resource mapping position, or a set-to-0 frequency domain resource mapping position of the first PBCH.

5. The method according to any one of claims 1 to 4, wherein the first frequency domain resource mapping position is associated with at least one of the following: a center frequency position of the first SSB, a highest frequency position of a synchronization signal in the first SSB, a lowest frequency position of a synchronization signal in the first SSB, a center subcarrier position of a synchronization signal in the first SSB, or a frequency band number corresponding to the first frequency position.

6. The method according to any one of claims 1 to 5, wherein the first frequency position is the center subcarrier position of the synchronization signal in the first SSB, and the determining the first frequency position of the first SSB comprises:

determining the center subcarrier position from a plurality of frequency positions, wherein the plurality of frequency positions $SS_{REF}$ satisfy:

$$SS_{REF} = Y \times f_1 + Z \times f_2 + X,$$

wherein
$f_1$ represents a first frequency greater than 0, $f_2$ represents a second frequency greater than 0, Y and Z are positive integers, X is a non-negative integer, and the first frequency domain resource mapping position is associated with a first value of Y and/or a second value of Z, wherein the first value is a value of Y corresponding to the first frequency position, and the second value is a value of Z corresponding to the first frequency position.

7. The method according to any one of claims 1 to 6, wherein the first frequency domain resource mapping position $F_{PBCH}$ satisfies $F_{low} \leq F_{PBCH} \leq F_{high}$, wherein $F_{low}$ represents the lowest frequency domain resource mapping position of the first frequency domain resource mapping position, and $F_{high}$ represents the highest frequency domain resource mapping position of the first frequency domain resource mapping position, wherein
$F_{high}$ satisfies $F_{high} = F_{ref} + offset1$, and $F_{low}$ satisfies $F_{ref} - offset2$, wherein offset1 represents a first offset value, offset2 represents a second offset value, $F_{ref}$ represents a reference frequency position, and the reference frequency position is associated with the first frequency position.

8. The method according to claims 2 to 7, wherein the channel bandwidth is 3 megahertz MHz, the transmission bandwidth is less than 5 MHz, the transmission bandwidth is 12 resource blocks RBs or 15 RBs, or the maximum transmission bandwidth is 12 RBs or 15 RBs.

9. A communication method, wherein the method comprises:

determining a first frequency position of a first synchronization broadcast signal block SSB, wherein the first SSB comprises a first physical broadcast channel PBCH, the first frequency position is associated with a first frequency domain resource mapping position of the first PBCH, frequency domain bandwidth occupied by the first PBCH is less than first bandwidth, and the first bandwidth is frequency domain bandwidth of a second PBCH; and

sending the first SSB at the first frequency position.

10. The method according to claim 9, wherein the first frequency domain resource mapping position is a resource position in channel bandwidth, transmission bandwidth, or maximum transmission bandwidth.

11. The method according to claim 9 or 10, wherein the first frequency position is associated with the channel bandwidth, the transmission bandwidth, or the maximum transmission bandwidth.

12. The method according to any one of claims 9 to 11, wherein the first frequency position is associated with at least one of the following: a highest frequency domain resource mapping position of the first frequency domain resource mapping position, a lowest frequency domain resource mapping position of the first frequency domain resource mapping position, a center frequency domain resource mapping position of the first frequency domain resource mapping position, or a set-to-0 frequency domain resource mapping position of the first PBCH.

13. The method according to any one of claims 9 to 12, wherein the first frequency domain resource mapping position is associated with at least one of the following: a center frequency position of the first SSB, a highest frequency position of a synchronization signal in the first SSB, a lowest frequency position of a synchronization signal in the first SSB, a center subcarrier position of a synchronization signal in the first SSB, or a frequency band number corresponding to the first frequency position.

14. The method according to any one of claims 9 to 13, wherein the first frequency position is the center subcarrier position of the synchronization signal in the first SSB, and the determining the first frequency position of the first SSB comprises:

determining the center subcarrier position from a plurality of frequency positions, wherein the plurality of frequency positions $SS_{REF}$ satisfy:

$$SS_{REF}=Y \times f_1 + Z \times f_2 + X,$$

wherein

$f_1$ represents a first frequency greater than 0, $f_2$ represents a second frequency greater than 0, Y and Z are positive integers, X is a positive number, and the first frequency domain resource mapping position is associated with a first value of Y and/or a second value of Z, wherein the first value is a value of Y corresponding to the first frequency position, and the second value is a value of Z corresponding to the first frequency position.

15. The method according to any one of claims 9 to 14, wherein the first frequency domain resource mapping position $F_{PBCH}$ satisfies $F_{low} \leq F_{PBCH} \leq F_{high}$, wherein $F_{low}$ represents the lowest frequency domain resource mapping position of the first frequency domain resource mapping position, and $F_{high}$ represents the highest frequency domain resource mapping position of the first frequency domain resource mapping position, wherein $F_{high}$ satisfies $F_{high}=F_{ref}+offset1$, and $F_{low}$ satisfies $F_{ref}-offset2$, wherein offset1 represents a first offset value, offset2 represents a second offset value, $F_{ref}$ represents a reference frequency position, and the reference frequency position is associated with the first frequency position.

16. The method according to claims 10 to 15, wherein the channel bandwidth is 3 megahertz MHz, the transmission bandwidth is less than 5 MHz, the transmission bandwidth is 12 resource blocks RBs or 15 RBs, or the maximum transmission bandwidth is 12 RBs or 15 RBs.

17. A communication apparatus, comprising a module or unit configured to perform the method according to any one of claims 1 to 8, or a module or unit configured to perform the method according to any one of claims 9 to 16.

18. A computer-readable storage medium, wherein the computer-readable storage medium stores a computer program, and when the computer program is run on a computer, the computer is caused to perform the method according to any one of claims 1 to 8, or the computer is caused to perform the method according to any one of claims 9 to 16.

19. A computer program product, comprising computer program code, wherein when the computer program code is run on a computer, the computer is caused to implement the method according to any one of claims 1 to 8, or the computer is caused to implement the method according to any one of claims 9 to 16.

20. A chip, comprising a processor, wherein the processor is coupled to a memory, the memory is configured to store a computer program, and the processor is configured to execute the computer program stored in the memory to implement the method according to any one of claims 1 to 8, or to implement the method according to any one of claims 9 to 16.

21. A communication system, comprising a communication apparatus configured to perform the method according to any one of claims 1 to 8 and a communication apparatus configured to perform the method according to any one of claims 9 to 16.

FIG. 1

FIG. 2

N*1200 kHz+M*50 kHz, N=1:2499, and M=1, 3, or 5

1250 1350 1450          2450 2550 2650          3650 3750 3850          ...     kHz

N=1                          N=2                          N=3
M=1, 3, or 5               M=1, 3, or 5               M=1, 3, or 5

FIG. 3

| Network device | | Terminal device |
|---|---|---|

S410: Determine a first frequency position of a first SSB, where the first SSB includes a first PBCH, and there is an association relationship between the first frequency position and a first frequency domain resource mapping position

S420: First SSB →

Determine the first frequency position, and receive the first PBCH based on the first frequency domain resource mapping position

FIG. 4

Y*1200 kHz+Z*50 kHz+0, Y=1:2499, and Z=1, 3, 5, 7, 9, or 11

kHz

1250  1350  1450    1550  1650  1750        2450  2550  2650    2750  2850  2950        ...

Y=1
Z=1, 3, or 5

Y=1
Z=7, 9, or 11

Y=2
Z=1, 3, or 5

Y=2
Z=7, 9, or 11

Set-to-0
mode #1

Set-to-0
mode #2

Set-to-0
mode #1

Set-to-0
mode #2

FIG. 5(a)

EP 4 701 279 A1

Y*600 kHz+Z*50 kHz+0, Y=1:4998, and Z=1, 3, or 5

| 650 | 750 | 850 | 1250 | 1350 | 1450 | 1850 | 1950 | 2050 | 2450 | 2550 | 2650 | ... | kHz |

Y=1
Z=1, 3, or 5
Set-to-0
mode #1

Y=2
Z=1, 3, or 5
Set-to-0
mode #2

Y=3
Z=1, 3, or 5
Set-to-0
mode #1

Y=4
Z=1, 3, or 5
Set-to-0
mode #2

FIG. 5(b)

Y*600 kHz+Z*50 kHz+0, Y=1:4998, and Z=1, 3, 5, 7, 9, or 11

650    750    850    950    1050    1150    1250    1350    1450    1550    1650    1750                    ...            kHz

Y=1
Z=1, 3, or 5

Set-to-0
mode #2

Y=1
Z=7, 9, or 11

Set-to-0
mode #2

Y=2
Z=1, 3, or 5

Set-to-0
mode #1

Y=2
Z=7, 9, or 11

Set-to-0
mode #2

FIG. 5(c)

FIG. 6(a)

FIG. 6(b)

Set-to-0
position

PBCH

$F_{high}$

Offset1

PSS | PBCH | SSS | PBCH | $F_{ref}$

Offset2

PBCH

Set-to-0 position

$F_{low}$

FIG. 6(c)

Set-to-0
position

PBCH

$F_{high}$

PSS | PBCH | SSS | PBCH | $N_{RB}^{PBCH}$

PBCH

Set-to-0 position

$F_{low}$

Offset3

$F_{ref}$

FIG. 6(d)

FIG. 6(e)

FIG. 7

10

Transceiver module 11

Processing module 12

Storage module 13

FIG. 8

20

Processor 21

Transceiver 23

Memory 22

FIG. 9

Chip system
30

Logic circuit 31

Input/Output
interface 32

FIG. 10

## INTERNATIONAL SEARCH REPORT

| International application No. |
| --- |
| **PCT/CN2024/089112** |

| A. | CLASSIFICATION OF SUBJECT MATTER |
| --- | --- |

H04W52/02(2009.01)i;   H04W72/04(2023.01)i

According to International Patent Classification (IPC) or to both national classification and IPC

| B. | FIELDS SEARCHED |
| --- | --- |

Minimum documentation searched (classification system followed by classification symbols)

IPC: H04W,H04L

Documentation searched other than minimum documentation to the extent that such documents are included in the fields searched

Electronic data base consulted during the international search (name of data base and, where practicable, search terms used)

3GPP, CNTXT, ENTXTC, WPABSC, CNKI: 窄带, 下一代, 同步广播信息块, 物理广播信道, 资源, 映射, 频率, 频域, 带宽, 位置, 个数, 大小, 子载波, 打孔, 置零, narrow, bandwidth, band, SSB, PBCH, NR, frequency, position, RB, RE, map, puncture

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 115707013 A (HUAWEI TECHNOLOGIES CO., LTD.) 17 February 2023 (2023-02-17) description, paragraphs 100-267, and figures 1-7 | 1-3, 8-11, 16-21 |
| Y | CN 115707013 A (HUAWEI TECHNOLOGIES CO., LTD.) 17 February 2023 (2023-02-17) description, paragraphs 100-267, and figures 1-7 | 4-5, 12-13 |
| Y | CN 115696521 A (HUAWEI TECHNOLOGIES CO., LTD.) 03 February 2023 (2023-02-03) description, paragraphs 180-403, and figures 1-7 | 4-5, 12-13 |
| A | KDDI CORP. "R1-154433 "Discussion on narrow-band resource allocation"" *3GPP TSG RAN WG1 Meeting #82 Beijing, China, 24th-28th August 2015*, 14 August 2015 (2015-08-14), entire document | 1-21 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **12 July 2024** | **22 July 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/089112**

| Patent document cited in search report | | | Publication date (day/month/year) | Patent family member(s) | Publication date (day/month/year) |
|---|---|---|---|---|---|
| CN | 115707013 | A | 17 February 2023 | None | |
| CN | 115696521 | A | 03 February 2023 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310541902